(19) Europäisches Patentamt
European Patent Office
Office européen des brevets

(11) Veröffentlichungsnummer: **0 132 630 A2**

# (12) EUROPÄISCHE PATENTANMELDUNG

(21) Anmeldenummer: 84107636.7

(22) Anmeldetag: 02.07.84

(51) Int. Cl.[4]: C 08 F 30/02
C 02 F 5/14, D 06 P 1/52
E 21 B 43/27, E 21 B 43/22
B 01 J 20/26

(30) Priorität: 22.07.83 DE 3326391

(43) Veröffentlichungstag der Anmeldung: 13.02.85 Patentblatt 85/7

(84) Benannte Vertragsstaaten: AT BE CH DE FR GB IT LI NL SE

(71) Anmelder: CASSELLA Aktiengesellschaft
Hanauer Landstrasse 526
D-6000 Frankfurt am Main 61(DE)

(72) Erfinder: Balzer, Juliane
Im Trutz Frankfurt 51
D-6000 Frankfurt 1(DE)

(72) Erfinder: Greiner, Ulrich, Dr.
Nidderauerstrasse 13
D-6369 Schöneck(DE)

(72) Erfinder: Sauer, Josef, Dr.
Rannenbergring 9
D-8755 Alzenau(DE)

(72) Erfinder: Engelhardt, Friedrich, Dr.
Hünfelder Strasse 20
D-6000 Frankfurt/Main 61(DE)

(72) Erfinder: Riegel, Ulrich
Steinäckerstrasse 6
D-6000 Frankfurt/Main 61(DE)

(74) Vertreter: Urbach, Hans-Georg, Dr. et al,
Hanauer Landstrasse 526
D-6000 Frankfurt am Main 61(DE)

## (54) Phosphonsäuregruppen enthaltende Polymerisate, ihre Herstellung und ihre Verwendung.

(57) Homo- und Copolymerisate, die in den Polymerisatketten baugruppen der Formel II

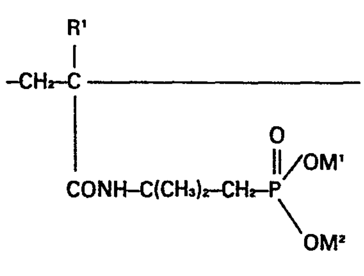

(II)

enthalten, worin
R' Wasserstoff oder Methyl bedeutet,
M' und M² gleich oder verschieden sind und Wasserstoff oder ein Äquivalent eines Kations bedeuten und r eine Durchschnittszahl ist, die größer oder gleich 100 ist, und deren Herstellung durch Homo- von 2-Acrylamido-2-methyl-propanphosphonsäure bzw. Copolymerisation dieser Verbindung mit anderen bekannten, copolymerisierbaren oldefinisch ungesättigten Monomeren.

Die neuen Homo- und Copolymerisate sowie deren Chelate mit mehrwertigen Metallkationen dienen als Verdicker für wäßrige Zubereitungen, insbesondere für Säurefluids auf den Gebiet der Erdöl-Tertiärförderung.

EP 0 132 630 A2

# Phosphonsäuregruppen enthaltende Polymerisate, ihre Herstellung und ihre Verwendung.

Die vorliegende Erfindung betrifft neue Homo- und Copolymerisate, die auch vernetzt sein können und die in den Grundketten Substituenten der Formel

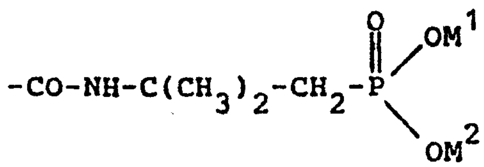

aufweisen. Diese Substituenten vermitteln den erfindungsgemäßen Polymerisaten eine Kombination anwendungstechnisch wertvoller Eigenschaften, die ihnen zahlreiche Anwendungsmöglichkeiten eröffnen.

Eine spezielle Gruppe erfindungsgemäßer Polymerisate sind Homo- und Copolymerisate der Formel I

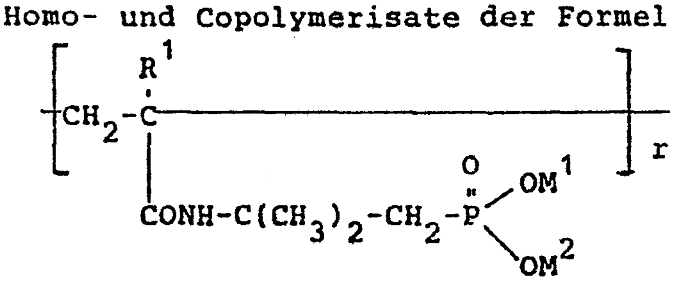

(I)

worin
$R^1$ Wasserstoff oder Methyl bedeutet,
$M^1$ und $M^2$ gleich oder verschieden sind und Wasserstoff oder ein Äquivalent eines Kations bedeuten und
r eine Durchschnittszahl ist, die größer oder gleich 100 ist.

Eine weitere spezielle Gruppe erfindungsgemäßer Polymerisate sind Copolymerisate, die aus verschiedenen bekannten Polymerbaugruppen aufgebaut sind und dadurch charakterisiert sind, daß in ihren Kettenmolekülen unter anderem Baugruppen der Formel II

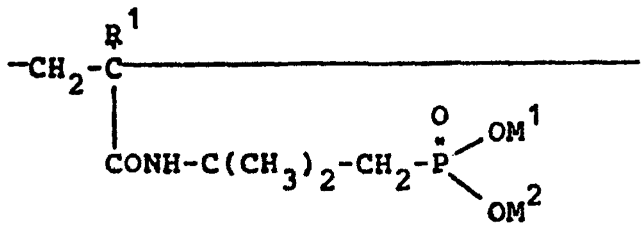

(II)

worin $R^1$, $M^1$ und $M^2$ die im Anspruch 1 genannten Bedeutungen haben, enthalten.

Die in erfindungsgemäßen Copolymerisaten vorhandenen verschiedenen bekannten Polymerbaugruppen leiten sich im Prinzip von allen bekannten, copolymerisierbaren Verbindungen mit einer oder zwei olefinischen C-C-Doppelbindungen ab.

Solche bekannten copolymerisierbaren Verbindungen sind insbesondere die Gruppe der Acrylsäurederivate, Methacrylsäurederivate, Vinylchloride, Styrolderivate, Vinylheterocyclen, Vinylsulfonsäure, Vinylphosphonsäure und Allylverbindungen sowie Diene wie Butadien und Isopren.

Erfindungsgemäße Copolymerisate mit unterschiedlichen Baugruppen sind insbesondere solche, die aus Baugruppen der Formeln II, III und gegebenenfalls IV und V

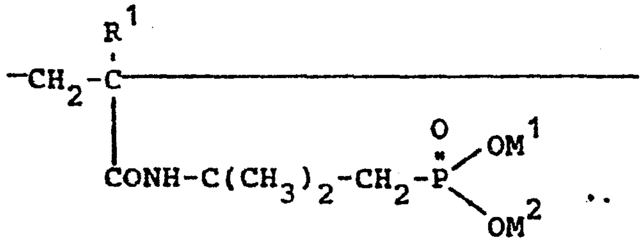

(II)

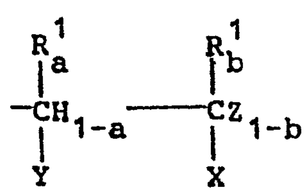

(III)

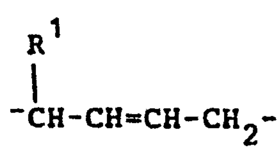

(IV)

0132630

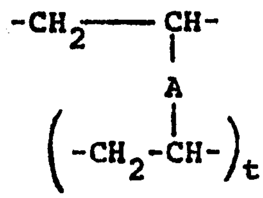

(V)

aufgebaut sind, worin $R^1$, $M^1$ und $M^2$ die oben genannten Bedeutungen haben und X die Carbonamidgruppe $-CONH_2$; eine Gruppe der Formel VI

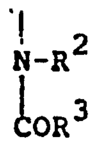

(VI)

worin $R^2$ Wasserstoff, Methyl, Ethyl oder Hydroxymethyl und $R^3$ Wasserstoff oder Alkyl mit 1 bis 4 C-Atomen bedeuten oder $R^2$ und $R^3$ gemeinsam für eine Polymethylenkette mit 3 bis 6 C-Atomen stehen; Carboxyl oder dessen Salz mit einem Kation $M^1$ oder $M^2$; Alkylcarbonyl(Alkyl-CO-) mit insgesamt 2 bis 20C-Atomen; Alkoxycarbonyl mit 2 bis 19, vorzugsweise 2 bis 5 C-Atomen, Hydroxyalkoxycarbonyl mit 3 bis 5 C-Atomen; N-Methylolcarbonamid der Formel $HOCH_2NH-CO-$, dessen Methylolgruppe gegebenenfalls mit Alkanolen mit 1 bis 18 C-Atomen verethert sein kann; Alkoxy mit 1 bis 20 C-Atomen; Alkanoyloxy mit 1 bis 20 C-Atomen; Chlor; Cyan; gegebenenfalls substituiertes Phenyl oder Benzyl; Pyridyl; Imidazolyl-(1); die Sulfonsäuregruppe; Sulfoalkylamidocarbonyl mit 1 bis 4 C-Atomen im Alkylrest; die Phosphonsäuregruppe, wobei die Sulfonsäure- und Phosphonsäuregruppen auch in Form ihrer Salze mit einem Kation $M^1$ oder $M^2$ vorliegen können; die Phosphonsäureestergruppen der Formeln VII und VIII

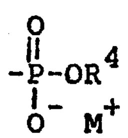 (VII)

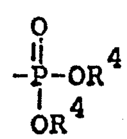 (VIII)

worin $R^4$ Alkyl mit 1 bis 4, vorzugsweise 1 oder 2, C-

Atomen ist; einen Rest der Formel IX

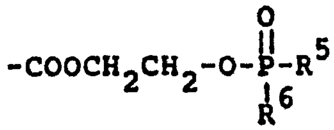

(IX)

worin $R^5$ und $R^6$ gleich oder verschieden sind und für Alkyl mit 1 bis 7, vorzugsweise 1 oder 2, C-Atomen stehen; einen Rest der Formel X

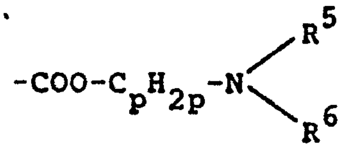

(X)

worin $R^5$ und $R^6$ die oben angegebenen Bedeutungen haben und p für eine Zahl von 1 bis 4 steht; einen Rest der Formel XI

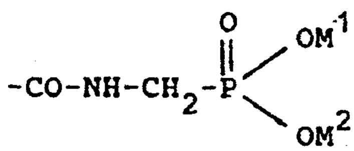

(XI)

worin $M^1$ und $M^2$ die oben genannten Bedeutungen haben; oder einen Rest der Formel XII

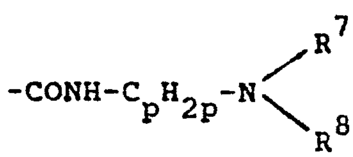

(XII)

worin $R^7$ und $R^8$ gleich oder verschieden sind und für Alkyl mit 1 bis 4, vorzugsweise 1 oder 2, C-Atomen stehen und p für eine Zahl von 1 bis 4 steht; sowie die den Formeln X und XII entsprechenden beispielsweise durch Dimethylsulfat oder Methylchlorid quaternisierten Gruppen bedeutet,

Y für Wasserstoff oder, sofern X Carboxyl bzw. dessen Salz ist, für Wasserstoff oder Carboxyl bzw. dessen Salz steht oder

X und Y gemeinsam einen zweiwertigen Substituenten der Formel XIII

$$-CO-O-CO- \qquad (XIII)$$

bilden; Z für Wasserstoff oder Halogen, vorzugsweise Chlor, steht, a und b jeweils die Werte 0 oder 1 haben können und die Summe a + b ebenfalls 0 oder 1 ist und A ein vernetzendes Brückenglied eines bekannten Vernetzers oder ein vernetzendes Brückenglied der Formel XIV, XV oder XVI

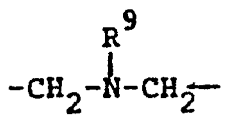

(XIV)

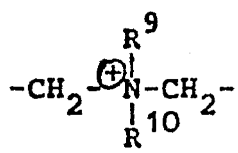

(XV)

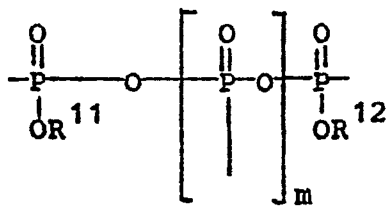

(XVI)

bedeutet, wobei $R^9$ für Wasserstoff oder Alkyl mit 1 - 24 C-Atomen und $R^{10}$ für Alkyl mit 1 bis 24 C-Atomen steht; $R^{11}$ und $R^{12}$ unabhängig voneinander Wasserstoff oder Alkyl mit 1 bis 4 C-Atomen bedeuten, m für eine Zahl von 0 bis 6, vorzugsweise 0 bis 2, und t für eine Zahl von 1 bis 3, vorzugsweise für 1, steht.

In Resten X enthaltene Alkylreste mit mehr als 3 bis 4 C-Atomen können primär, sekundär oder tertiär und geradkettig oder verzweigt sein. Auch die in den Resten der Formeln X und XII enthaltenen Kohlenwasserstoffbrücken $-C_pH_{2p}-$ können geradkettig oder verzweigt sein.

Von den erfindungsgemäßen Copolymerisaten, die u.a. Baugruppen der Formel III enthalten, sind diejenigen bevorzugt, bei denen in dieser Baugruppe a für Null, b

für 1 steht und Z Wasserstoff ist, bei denen somit diese Baugruppe der Formel XVII entspricht,

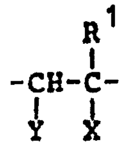

(XVII)

worin $R^1$, X und Y die oben angegebenen Bedeutungen haben.

Insbesondere sind solche Copolymerisate bevorzugt, bei denen in einer Baugruppe der Formel XVII $R^1$ und Y die oben genannten Bedeutungen haben und X die Carbonamidgruppe $-CONH_2$; eine Gruppe der Formel VI

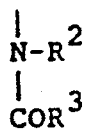

((VI)

worin $R^2$ Wasserstoff, Methyl, Ethyl und $R^3$ Wasserstoff oder Alkyl mit 1 bis 4 C-Atomen bedeuten oder $R^2$ und $R^3$ gemeinsam für eine Polymethylenkette mit 3 bis 6 C-Atomen stehen; Carboxyl oder dessen Salz mit einem Kation $M^1$ oder $M^2$; Alkoxycarbonyl mit 2 bis 5 C-Atomen, Hydroxyalkoxycarbonyl mit 3 bis 5 C-Atomen; N-Methylolcarbonamid der Formel $HOCH_2NH-CO-$; Alkoxy mit 1 bis 4 C-Atomen; Alkanoyloxy mit 1 bis 4 C-Atomen; Cyan; Phenyl; die Sulfonsäuregruppe; Sulfoalkylamidocarbonyl mit 1 bis 4 C-Atomen im Alkylrest; die Phosphonsäuregruppe, wobei die Sulfonsäure- und Phosphonsäuregruppen auch in Form ihrer Salze mit einem Kation $M^1$ oder $M^2$ vorliegen können; die Phosphonsäureestergruppe der Formel VII

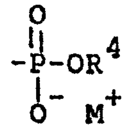

(VII)

worin $R^4$ Alkyl mit 1 bis 4, vorzugsweise 1 oder 2, C-Atomen ist; einen Rest der Formel X

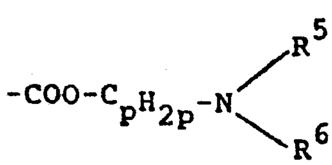

(X)

worin $R^5$ und $R^6$ gleich oder verschieden sind und für Alkyl mit 1 bis 7, vorzugsweise 1 oder 2, C-Atomen stehen und p für eine Zahl von 1 bis 4 steht; oder einen Rest der Formel XII

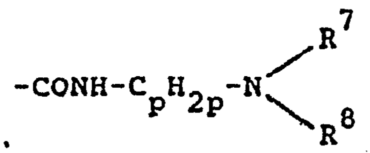

(XII)

worin $R^7$ und $R^8$ gleich oder verschieden sind und für Alkyl mit 1 bis 4, vorzugsweise 1 oder 2, C-Atomen stehen und p für eine Zahl von 1 bis 4 steht; sowie die den Formeln X und XII entsprechenden beispielsweise durch Dimethylsulfat oder Methylchlorid quaternisierten Gruppen bedeutet.

Von den vernetzten erfindungsgemäßen Copolymerisaten sind solche besonders bemerkenswert, die ein vernetzendes Brückenglied eines bekannten Vernetzers oder ein vernetzendes Brückenglied der Formel XV oder XVI

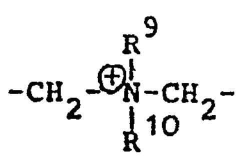

(XV)

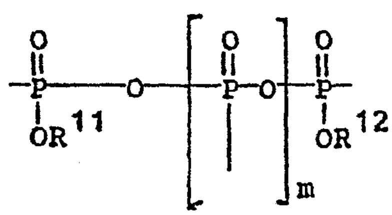

(XVI)

enthalten, wobei $R^9$ für Wasserstoff oder Alkyl mit 1 bis 4 C-Atomen und $R^{10}$ für Alkyl mit 1 bis 4 C-Atomen steht, $R^{11}$ und $R^{12}$ unabhängig voneinander Wasserstoff oder Alkyl mit 1 bis 4 C-Atomen bedeuten und m für eine Zahl von 0 bis 6, vorzugsweise 0 bis 2, steht.

In den erfindungsgemäßen vernetzten Copolymerisaten können die Brückenglieder der Formel XVI alle die gleiche

Struktur haben. Dies ist dann der Fall, wenn bei der Herstellung der Produkte eine einzige reine Vernetzersubstanz der Formel XVIa

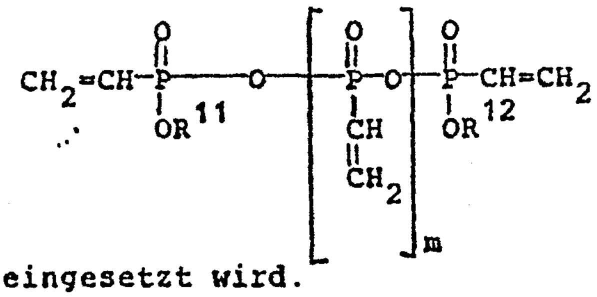

(XVIa)

eingesetzt wird.

Erfindungsgemäße vernetzte Copolymerisate können jedoch auch mehrere Arten strukturell unterschiedlicher Brückenglieder enthalten. So können sich die Brückenglieder hinsichtlich der Bedeutung der Reste $R^{11}$ und $R_{12}$ und/oder des Baugruppenindexes m voneinander unterscheiden, insbesondere können die Baugruppenindices m in statistischer Verteilung Werte von 0 bis 6 annehmen.

Die Häufigkeit der Einzelwerte für m kann dabei jeweils zwischen 0 und 1 liegen, wobei als Häufigkeit der Anteil eines Wertes m bezogen auf alle vorhandenen Werte für m definiert ist.

In der Praxis sind erfindungsgemäße vernetzte Copolymerisate, die verschiedene vernetzende Brückenglieder mit unterschiedlichen m-Werten enthalten, besonders vorteilhaft, weil sie bei guten anwendungstechnischen Eigenschaften wesentlich einfacher und damit kostengünstiger hergestellt werden können. Die für die Einführung der Brückenglieder in die Makromoleküle eingesetzten Vernetzersubstanzen der Formel XVIa können nur auf relativ umständliche Weise als einheitliche Substanzen hergestellt werden. Einfach jedoch sind Gemische dieser Substanzen zu erhalten, z.B. nach einem in der Europäischen Patentanmeldung Veröffentlichungs-Nr. 32 663 beschriebenen Verfahren. Solche Gemische sind in der angegebenen Europäischen Patentanmeldung durch die Formel

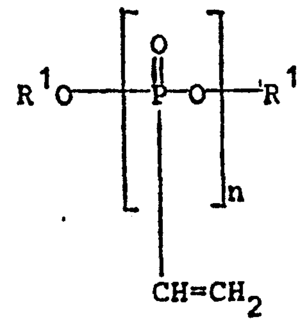

definiert worden, wobei $R^1$ Wasserstoff oder Alkyl mit 1 bis 4 C-Atomen bedeutet und n in der Praxis Werte von 1 bis 8 annehmen kann.

Solche Gemische können tel quel ohne Nachteile zur Herstellung der erfindungsgemäßen Produkte eingesetzt werden. Man erhält dann bevorzugte erfindungsgemäße vernetzten Copolymerisate, bei denen im Rahmen der statistischen Verteilung der Baugruppenindices m die Häufigkeit der einzelnen m-Werte mit der Häufigkeit der Werte für n in einem Rohprodukt der Herstellung von Verbindungen der Formel

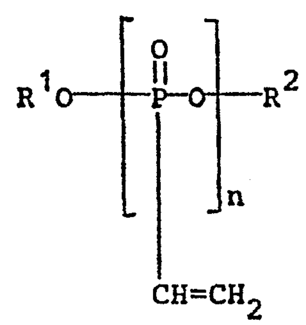

gemäß der Europäischen Patentanmeldung Veröffentlichungs-Nr. 32663 korreliert ist und zwar in der Weise, daß die Häufigkeit eines Wertes m gleich ist der Häufigkeit desjenigen Wertes n, der dem Zusammenhang n=m+2 genügt.

Die erfindungsgemäßen, aus unterschiedlichen Baugruppen aufgebauten unvernetzten und vernetzten Copolymerisate enthalten die sie charakterisierenden Baugruppen der Formel II in der Regel in einem Mengenanteil von 1 bis 99 Gew.%, vorzugsweise 2 bis 50 Gew.%, bezogen auf das

Gesamtgewicht des Polymers.

Eine weitere Gruppe bevorzugter erfindungsgemäßer Copolymerisate sind solche, die 1 bis 99 , insbesondere 2 bis 50, Gewichtsteile Baugruppen der Formel II, 1 bis 90, insbesondere 15 bis 60, Gewichtsteile Baugruppen der Formel III, 0 bis 80, insbesondere 10 bis 40, Baugruppen der Formel IV und 0 bis 80, insbesondere 10 bis 40, Baugruppen der Formel V enthalten.

Sollen die erfindungsgemäßen Copolymerisate überwiegend wasserlöslich oder wasserquellbar sein, so ist zu beachten, daß mindestens 70 % der Grundkettenbausteine solche Reste X aufweisen, die hydrophilen Charakter besitzen und mindestens etwa 2 %, vorzugsweise mindestens 7 %, der Reste X saure Gruppen aufweisen bzw. deren Salze mit den Kationen $M^1$ und/oder $M^2$.

Typische Gruppen, die hydrophilen Charakter haben, sind der Sulfonsäurerest oder Carboxyl sowie Gruppen X, die diese sauren Reste tragen, Carbonamid ($-CO-NH_2$) sowie dessen Methylolderivat und die Gruppe der Formel VI.

Typische Gruppen ohne hydrophilen Charakter sind z.B. Cyan, Phenyl oder Benzyl.

Bevorzugte erfindungsgemäße Copolymerisate sind auch solche, bei denen in 10 bis 90 Gew.%, insbesondere in 30 bis 70 Gew.%, der Brückenglieder der Formel III X eine Sulfo- oder Sulfoalkylamidocarbonylgruppe mit 1 bis 4 C-Atomen im Alkylrest ist, in 10 bis 90 Gew.%, insbesondere in 20 bis 60, Gew.% X eine Gruppe der Formel VI ist und in 5 bis 90, insbesondere 10 bis 80 Gew.% X eine der übrigen oben genannten Bedeutungen hat.

Die Natur der Kationen $M^1$ und $M^2$ richtet sich nach der gewünschten Eigenschaft des erfindungsgemäßen Homo- oder Copolymerisats.

Wird Wasserlöslichkeit der Produkte gewünscht oder sollen chelatisierbare Produkte erzielt werden, so können sich $M^1$ und $M^2$ prinzipiell von jeder wasserlöslichen bekannten Base ableiten, deren Stärke ausreicht, die Sulfongruppen bzw. Carboxylgruppen der erfindungsgemäßen Copolymerisate zu neutralisieren und die deren Hydrophilie nicht beeinträchtigt. Die Auswahl kann somit in einfacher bekannter Weise erfolgen.

Zweckmäßigerweise bedeuten jedoch $M^1$ und/oder $M^2$ ein Erdalkali- oder vorzugsweise ein Alkalikation, insbesondere ein Natrium- oder Kaliumkation, Ammonium oder ein von niederen aliphatischen Aminen abgeleitetes Kation. Niedere aliphatische Amine, von denen sich die Kationen $M^1$ und/oder $M^2$ ableiten können, sind primär, sekundär oder tertiär und weisen gegebenenfalls durch -OH-Gruppen substituierte Alkylgruppen mit 1 bis 4 C-Atomen auf. Bevorzugt sind solche, die mindestens einen ß-Hydroxyethylrest enthalten, wie z.B. ß-Aminoethanol, 2-Amino-2-methylpropanol-1, ß-Dimethylamino-ethanol, Bis-(ß-hydroxy-ethyl)-methylamin, Tris-(ß-hydroxyethyl)-amin, Diethyl-ß-hydroxyethylamin, Bis-(ß-hydroyethyl)ethylamin.

$M^1$ und/oder $M^2$ können jedoch auch mehrwertige Metallkationen und Metallkationen mit Koordinationszahlen >1 sein. Solche erfindungsgemäßen Produkte liegen vor in den extrem hochviskosen bis gelbildenden Metallchelaten erfindungsgemäßer Produkte. Mehrwertige oder höherkoordinative Metallkationen entsprechen vorwiegend den Metallen der dritten bis achten Gruppe sowie der zweiten Nebengruppe des periodischen Systems der Elemente.

Die erfindungsgemäßen Copolymerisate können im Molekül aus jeder der durch die allgemeinen Formeln I bis V und XVII definierten Baugruppen selbstverständlich auch mehrere verschiedene Individuen, die sich in den Bedeutungen der Symbole $M^1$, $M^2$, X, Y, Z oder $R^1$ bis $R^{12}$ unterscheiden, enthalten.

So können sie z.B. im gleichen Polymermolekül sowohl 2-Acrylamido-2-mehtyl-propansulfonsäure-(3)- als auch Vinylsulfonsäure-Bausteine oder ringoffene neben ringgeschlossenen Vinylamid-Gruppen der Formel VI oder auch Phosphonsäure-Ester-Gruppen mit verschiedenen Alkylresten $R^4$ unterschiedlicher Kettenlänge enthalten. In der Regel enthalten die erfindungsgemäßen Copolymerisate aus den einzelnen Gruppen der allgemeinen Formeln I bis V bzw. XVII nicht mehr als je 3, vorzugsweise nicht mehr als je 2, verschiedene Bausteine.

In den erfindungsgemäßen Copolymerisaten sind die einzelnen Arten der Kettenbausteine und gegebenenfalls der Brückenglieder in den Makromolekülen der erfindungsgemäßen Copolymerisate in der Regel statistisch verteilt.

Abweichungen von der rein statistischen Verteilung der Brückenglieder und auch der Monomeren in den Grundketten ändern erfahrungsgemäß nichts an der anwendungstechnischen Brauchbarkeit der erfindungsgemäßen vernetzten Copolymerisate. Geringfügige Abweichungen von der rein statistischen Verteilung können bereits durch die unterschiedliche Reaktivität der Monomeren und Vernetzer zustande kommen.

Sollen spezielle Eigenschaften wie z.B. besondere Grenzflächenaktivität der erfindungsgemäßen Copolymerisate besonders betont werden, so kann es auch zweckmäßig sein, wenn die Verteilung der Baugruppen in der Polymerkette nicht statistisch ist, sondern z.B. größere Kettenabschnitte unterschiedlicher Hydrophilie vorhanden sind. Die erfindungsgemäßen Copolymerisate haben dann das Aufbauschema von Block- oder Pfropfpolymerisaten.

Bevorzugt sind erfindungsgemäße Copolymerisate mit annähernd statistischer Baugruppenverteilung.

Bei der Herstellung der erfindungsgemäßen Copolymerisate sind die gleichen Grundsätze zu beachten, die für die

Herstellung anderer bekannter Copolymerisate mit sauren Gruppen gelten. Zwar sind unseres Wissens Copolymerisate mit Gruppen der Formel

$$-CO-NH-C(CH_3)_2-CH_2-\underset{OM^2}{\underset{|}{\overset{O}{\overset{\|}{P}}}}-OM^1$$

bisher nicht hergestellt worden, jedoch ist die analoge Herstellung von Polymerisaten, welche Sulfonsäuregruppen im Makromolekül eingebaut enthalten, bereits in zahlreichen Patenten sowie in der Fachliteratur ausführlich beschrieben worden. So ist z.B. die Synthese von Copolymeren der Vinylsulfonsäure mit Acrylamid und Vinylpyrrolidon in J. Polymer Sci., 38, 147 (1959) veröffentlicht worden.

Im DBP 11 01 760 ist ein Verfahren zur Herstellung wasserlöslicher Copolymerisate aus Vinylsulfonsäure und - Acrylnitril bzw. Methacrylnitril gegebenenfalls im Gemisch mit weiteren ethylenisch ungesättigten Verbindungen beschrieben worden. Copolymerisate aus Vinyl bzw. Alkylsulfonaten mit Acrylamid und Vinylamiden sind z.B. in der DE-AS 24 44 108 beschrieben worden.

Wasserlösliche Copolymerisate, welche 2-Acrylamido-2-methyl-propansulfonsäure-(3), im folgenden mit AIBS abgekürzt, als Comonomeres enthalten, sind in den US-Patentschriften 3,953,342, 3,768,565, 3,907,927, 3,926,718 sowie in den DE-OS 25 02 012 und 25 47 773 beschrieben.

Die erfindungsgemäßen Copolymerisate, soweit sie Reste der Formel VI enthalten, bei denen $R^3$ und $R^4$ gemeinsam Trimethylen oder Pentamethylen bedeuten, lassen sich in der aus dem Stand der Technik bekannten Weise, z.B. gemäß den Angaben der US-PS 3,929,741, durch Umsetzung der Monomeren bei Temperaturen von etwa 10 bis 120°C, vorzugsweise bei 40 bis 80°C, in Gegenwart von geeigneten Polymerisationskatalysatoren herstellen.

Will man, um erfindungsgemäße Copolymerisate herzustellen, die Gruppen der Formel VI enthalten, in denen $R^4$ und $R^5$ nicht gemeinsam für Tri- oder Pentamethylen stehen, unter analogen Bedingungen die Copolymerisation von AIBS, Styrol- oder Vinylsulfonsäure mit nicht ringgeschlossenen N-Vinylamiden der Formel VIa

$$CH_2{=}CH{-}\underset{}{\overset{R^4}{\overset{|}{N}}}-COR^5 \qquad (VIa)$$

durchführen, so ist es erforderlich, die sauren Komponenten vor der Polymerisation durch Zusatz von Basen in die Salze zu überführen. Die hierbei zweckmäßigerweise eingesetzten Basen sind die Hydroxyde oder Salze von Kationen $M^1$ und/oder $M^2$, die zu wasserlöslichen Polymerisaten führen, mit schwachen Säuren, wie z.B. Kohlensäure oder Phosphorsäure, oder im Falle von Aminbasen $NH_3$ oder die freien Amine, die oben bereits im einzelnen genannt wurden.

Die Neutralisation der sauren Komponenten vor der Polymerisation ist aber auch bei der Copolymerisation von ringgeschlossenen Verbindungen VIa möglich und in der Regel sogar vorteilhaft.

Erfindungsgemäße Homopolymerisate oder Copolymerisate, die an den Polymerketten Substituenten der Formel

$$-CO-NH-C(CH_3)_2-CH_2-\overset{O}{\overset{\|}{P}}(-OM^1)-OM^2$$

enthalten, werden demgemäß dadurch erhalten, daß man analog zu den bisher bekannten Polymerisationsverfahren Verbindungen der Formel IIa

$$CH_2=\overset{R^1}{\overset{|}{C}}-CO-NH-C(CH_3)_2-CH_2-\overset{O}{\overset{\|}{\underset{OM^2}{\underset{|}{P}}}}-OM^1 \quad \text{(IIa)}$$

in reiner Form homopolymerisiert oder in Mischung untereinander und/oder mit anderen bekannten copolymerisierbaren Verbindungen copolymerisiert, wobei, sofern Homopolymerisate oder Copolymerisate, die nur unter Einsatz verschiedener Verbindungen der Formel Ia erhalten werden, oder Copolymerisate, die unter Mitverwendung von anderen bekannten copolymerisierbaren Verbindungen, jedoch in Abwesenheit von ringoffenen Vinylamiden der Formel VIa

$$CH_2=CH-\overset{R^2}{\overset{|}{N}}-CO-R^3 \quad \text{(VIa)}$$

hergestellt werden, die sauren Gruppen der eingesetzten Monomeren vor der Polymerisation neutralisiert werden können, aber nicht müssen, sofern aber Copolymerisate in Gegenwart von ringoffenen Verbindungen der Formel VIa hergestellt werden, die sauren Gruppen vor der Polymerisation neutralisiert werden.

Zweckmäßigerweise werden somit zur Herstellung von je 100 Gewichtsteilen der erfindungsgemäßen Copolymerisate die gewünschte Menge, vorzugsweise 1 bis 99 Gewichtsteile, eines Acrylsäure- bzw. Methacrylsäurederivats der Formel IIa

$$CH_2=\overset{R^1}{\overset{|}{C}}-CO-NH-C(CH_3)_2-CH_2-\overset{O}{\overset{\|}{\underset{OM^2}{\underset{|}{P}}}}-OM^1 \quad \text{(IIa)}$$

worin $R^1$, $M^1$ und $M^2$ die oben angegebenen Bedeutungen haben, in reiner Form oder eine Mischung mehrerer Verbindungen dieser allgemeinen Formel mit der zu 100 Gewichtsteilen ergänzenden Menge, vorzugsweise 99 bis 1 Gewichtsteilen, anderer bekannter copolymerisierbarer Monomerer, vorzugsweise von Comonomeren der Formel IIIa

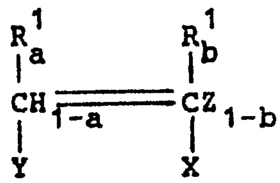

(IIIa)

und insbesondere von solchen der Formel XVIIa

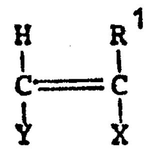

(XVIIa)

worin $R^1$, X, Y, Z, a und b die oben genannten Bedeutungen haben und zwischen a und b die oben angegebene Beziehung besteht, sowie gegebenenfalls ein Dien der Formel IVa

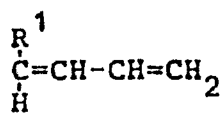

(IVa)

und gegebenenfalls eine bekannte Vernetzersubstanz und/oder eine mehrfach ungesättigte Verbindung der Formel Va

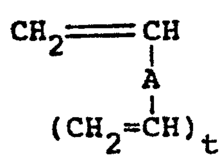

(Va)

worin $R^1$ und R die oben genannten Bedeutungen haben, copolymerisiert, wobei für den Fall, daß ein Comonomeres der Formel IIIa eingesetzt wird, in dem X eine Gruppe der Formel VI ist, worin $R^4$ und $R^5$ nicht gemeinsam eine Tri-oder Pentamethylengruppe bilden, obligatorisch für den Fall, daß kein derartiges Comonomeres eingesetzt wird, gegebenenfalls durch Zusatz einer Base die sauren Gruppen neutralisiert werden und die Copolymerisation in an sich bekannter Weise eingeleitet und bei 10 bis 120°C durchgeführt wird.

Beispiele für Verbindungen der Formel IIa, die bei der Herstellung erfindungsgemäßer Copolymerisate eingesetzt werden, sind:

2-Acrylamido-2-methyl-propan-1-phosphonsäure,

2-Methacrylamido-2-methyl-propan-1-phosphonsäure sowie deren Alkali- oder Ammoniumsalze. Beispiele für Verbindungen der Formel IIIa sind:
Acrylamid, Methacrylamid, N-Vinylformamid, N-Vinyl-N-methylformamid, N-Vinylacetamid, N-VinylN-methyl-acetamid, N-Vinyl-N-ethyl-acetamid, N-Vinyl-N-propyl-acetamid, N-Vinylpropionamid, N-Vinyl-N-methyl-propionamid, N-Vinyl-N-ethyl-propionamid, N-Vinyl-butyramid, N-Vinyl-N-methyl-butyramid, N-Vinylcapronamid, N-Vinyl-N-methylcapronamid, N-Vinyl-N-hydroxymethyl-formamid, N-Vinyl-N-hydroxymethyl-acetamid, N-Vinyl-N-hydroxymethyl-propionamid, N-Allylformamid, N-Allyl-N-methyl-formamid, N-Allyl-acetamid, N-Allyl-N-methyl-acetamid, N-Allyl-N-ethyl-acetamid, N-Allyl-N-methyl-propionamid, N-Allylbutyramid, N-Allyl-N-hydroxymethyl-acetamid, N-Vinylpyrrolidon, N-Vinyl-caprolactam, Acrylsäure und Methacrylsäure sowie deren Alkali- und Ammoniumsalze, Vinylmethyl-keton, Vinyl-ethyl-keton, Vinyl-butyl-keton, Methylacrylat, Methylmethacrylat, Ethylacrylat, Ethylmethacrylat, Propylacrylat, Propylmethacrylat, Isopropylacrylat, Isopropylmethacrylat, Butylacrylat, Isobutylacrylat, tert. Butylacrylat, Butylmethacrylat, Isobutylmethacrylat, Amylacrylat, Amylmethacrylat, Hexylacrylat, Hexylmethacrylat, 2-Ethyl-hexyl-acrylat, 2-Ethyl-hexylmethacrylat, n-Octylacrylat, n-Octylmethacrylat, Dodecylacrylat, Dodecylmethacrylat, Hexadecylacrylat, Hexadecylmethacrylat, ß-Hydroxyethylacrylat, ß-Hydroxyethylmethacrylat, ß- oder $\gamma$-Hydroxypropylacrylat, oder -methacrylat, Hydroxyisopropylacrylat, N-Methylolacrylamid, N-Methylolmethacrylamid, N-Methoxymethylacrylamid, N-Methoxymethylmethacrylamid, N-Butoxymethylacrylamid, N-Butoxymethylmethacrylamid, Isooctyloxymethylacrylamid, Vinylmethylether, Vinylethylether, Vinylpropylether, Vinylisopropylether, Vinylbutylether, Vinylisobutylether, Vinylformiat, Vinylacetat, Vinylpropionat, Vinylbutyrat, Vinylisobutyrat, Vinylcapronat, Vinylchlorid, Vinylidenchlorid, Allylchlorid, Acrylnitril, Methacrylnitril, Styrol, 2-, 3-oder 4-Methylstyrol, 2-, 3- oder 4-Ethylstyrol, 2,4-, 2,6-, 3,4-oder

3,5-Dimethylstyrol, 2-, 3- oder 4-Chlor- oder -fluorstyrol, 4-Bromstyrol, 2,3-, 2,4-, 2,5-, 2,6-, 3,4-oder 3,5-Dichlorstyrol, 4-Ethylhexylstyrol, 3-ß-Bromethylstyrol, 1-Phenylpropen-1, 2-Phenylpropen-1, 2-(2-, 3- oder 4-Methylphenyl)-propen-1, Vinylpyridin-1, Vinylimidazol, Vinylsulfonsäure, 2-Acrylamido-2-methylpropan-1-sulfonsäure, Vinylphosphonsäure, Vinylphosphonsäuremonomethylester, Vinylphosphonsäuremonoethylester, Vinylphosphonsäuremonopropylester, Vinylphosphonsäuremonoisopropylester, Vinylphosphonsäuremonobutylester, Vinylphosphonsäuremonoisobutylester, und deren Alkali- oder Ammoniumsalze Vinylphosphonsäuredimethylester, Vinylphosphonsäurediethylester, Vinylphosphonsäuredipropylester, Vinylphosphonsäuredibutylester, 2-Methacrylamido-2-methylpropan-1-sulfonsäure, Dimethylphosphinsäure-ester bzw. Diethylphosphinsäure-ester des ß-Hydroxyethylacrylats oder ß-Hydroxyethylmethacrylats, 2-Dimethylaminoethylacrylat, 2-Dimethylaminoethylmethacrylat, 2-Diethylaminoethylacrylat bzw. -methacrylat, 4-Dimethylaminobutylacrylat bzw. -methacrylat, 4-Diethylaminobutylacrylat oder -methacrylat, Acrylamidomethylphosphonsäure, Methacrylamidomethylphosphonsäure, N-(2-Methylaminoethyl)-acrylamid und -methacrylamid, N-(2-Diethylaminoethyl)-acrylamid und -methacrylamid, N-(3-Dimethylaminopropyl)-acrylamid und -methacrylamid, N-(4-Dimethylaminobutyl)-acrylamid und -methacrylamid, N-(2-Dimethylaminobutyl)-acrylamid und -methacrylamid, 2-Trimethylammoniumethylacrylat- und -methacrylat-hydrochlorid, 2-Triethylammoniumethylacrylat- und -methacrylat-hydrochlorid, N-(2-Trimethylammoniumethyl)-acryl-amid- und -methacrylamid-methosulfat, N-(2-Triethylammoniumethyl)-acrylamid- und -methacrylamid-hydrobromid, Maleinsäure bzw. Maleinsäureanhydrid.

Beispiele für Verbindungen der Formel IVa sind: Butadien und Isopren.

In der Gruppe der Verbindungen der Formel Va befinden sich bekannte Vernetzer wie beispielsweise Divinylbenzol, Methylenbisacrylamid, Butandioldiacrylat und Butandioldimethacrylat, Tetraallyloxethan, Trisacryloylperhydrotriazin, Triallylisocyanurat.
Verbindungen aus der Gruppe Va, die ein Brückenglied der Formel XIII einführen können, sind beispielsweise Methyldiallylamin oder Ethyldiallylamin, Isooctyldiallylamin.
Verbindungen der Formel Va, die einen Rest der Formel XIV einführen können, sind beispielsweise Dimethyldiallylammoniumchlorid, Diethyldiallylammoniumchlorid.
Verbindungen der Formel Va, die ein Brückenglied der Formel XV einführen können, sind die Vinylphosphonsäureanhydride, insbesondere Mischungen derselben untereinander und mit Vinylphosphonsäureester, wie sie beispielsweise nach den Angaben der EP-Patentanmeldung Veröffentlichungs-Nr. 32 663 erhalten werden können.

Besonders zweckmäßig ist es, bei der Herstellung der erfindungsgemäßen vernetzten Copolymerisate keine reine Verbindung der Formel Ia als Vernetzer einzusetzen, sondern ein Rohprodukt der Herstellung von Verbindungen der Formel XVIII

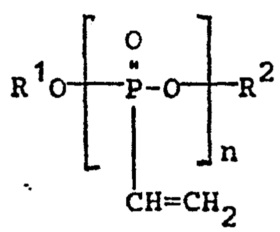

(XVIII)

gemäß der EP-Patentanmeldung Veröffentlichungs-Nr. 32 663.

In diesem Fall werden erfindungsgemäße vernetzte Copolymerisate erhalten, die mehrere verschiedene Brückenglieder der Formel XVI enthalten, wobei im Rahmen der statistischen Verteilung der Baugruppenindices m die Häufigkeit der einzelnen m-Werte mit der Häufigkeit der Werte für n in dem eingesetzten Rohprodukt in der Weise korreliert ist, daß die Häufigkeit eines Wertes m gleich ist der Häufigkeit desjenigen Wertes n, der dem Zusammenhang n=m+2 genügt.

Von den erfindungsgemäßen Copolymerisaten, die nicht ausschließlich durch Copolymerisation von Verbindungen der Formel IIa erhalten werden, sind solche bevorzugt, die durch Copolymerisation von 1 bis 99, insbesondere von 2 bis 50, Gewichtsteilen Verbindungen der Formel IIa und 99 bis 1, insbesondere 98 bis 50, Gewichtsteilen von Comonomeren der Formeln IIIa, IVa und Va erhalten werden.

Eine weitere Gruppe bevorzugter erfindungsgemäßer Copolymerisate wird erhalten, wenn man 1 bis 99, insbesondere 2 bis 50, Gewichtsteile Monomere der Formel IIa, 1 bis 90, insbesondere 15 bis 60, Gewichtsteile Monomere der Formel IIIa, 0 bis 80, insbesondere 10 bis 40, Monomere der Formel IVa und 0 bis 80, insbesondere 10 bis 40, Monomere der Formel Va der Copolymerisation unterwirft.

Sollen erfindungsgemäße Copolymerisate mit besonders betonter Hydrophilie hergestellt werden, d.h. sollen sie wasserlöslich oder wasserquellbar sein, so ist zu beachten, daß mindestens 70 % der Ausgangs-Monomeren solche Reste X aufweisen, die hydrophilen Charakter besitzen und mindestens etwa 2 %, vorzugsweise mindestens 7 %, der Reste X saure Gruppen aufweisen bzw. deren Salze. Typische Gruppen, die hydrophilen Charakter haben, sind der Sulfonsäurerest oder Carboxyl sowie Gruppen X, die diese sauren Reste tragen, Carbonamid ($-CO-NH_2$) sowie dessen Methylolderivat, die Gruppe der Formel VI mit niederen Alkylresten $R^2$ und $R^3$ sowie Reste mit Amino-oder Niederalkylamino oder Niederalkylammoniumgruppen.

Bevorzugte erfindungsgemäße Copolymerisate werden auch erhalten, wenn in 10 bis 90 Gew.%, insbesondere in 30 bis 70 Gew.%, der Comonomeren der Formel IIIa X eine Sulfo-oder Sulfoalkylamidocarbonylgruppe mit 1 bis 4 C-Atomen im Alkylrest ist, in 10 bis 90 Gew.%, insbesondere in 20 bis 60, Gew.% der Comonomeren der Formel IIIa X eine Gruppe der Formel VI ist und in 5 bis 90, insbesondere 10 bis 80 Gew.% der Comonomeren der Formel IIIa X eine der übrigen oben genannten Bedeutungen hat.

Die erfindungsgemäßen Polymerisate können nach den üblichen Polymerisationsverfahren, wie Lösungspolymerisation, Substanzpolymerisation, Emulsionspolymerisation, inverse Emulsionspolymerisation, Fällungspolymerisation, Gelpolymerisation hergestellt werden.

Vorzugsweise wird die Polymerisation als Gelpolymerisation, als Fällungspolymerisation oder in umgekehrter Emulsion ausgeführt.

Bei der Durchführung der Copolymerisation in einem mit Wasser mischbaren organischen Lösungsmittel arbeitet man unter den Bedingungen der Fällungspolymerisation. Hierbei fällt das Polymerisat direkt in fester Form an und kann durch Abdestillieren des Lösungsmittels oder Absaugen und Trocknen isoliert werden.

Als wassermischbare organische Lösungsmittel, die zur Durchführung des erfindungsgemäßen Herstellungsverfahrens geeignet sind, kommen insbesondere wasserlösliche Alkanole, nämlich solche mit 1 bis 4 C-Atomen, wie Methanol, Ethanol, Propanol, Isopropanol, n-, sec- und iso-Butanol, vorzugsweise aber tert. Butanol, in Betracht.

Der Wassergehalt der hierbei als Lösungsmitel eingesetzten niederen Alkanole sollte 6 Gew.% nicht überschreiten, da sonst eine Klumpenbildung bei der Polymerisation auftreten kann. Vorzugsweise wird bei einem Wassergehalt von 0 - 3 Gew.% gearbeitet.

Die Menge des einzusetzenden Lösungsmittels richtet sich bis zu einem gewissen Grad nach der Art der eingesetzten Comonomeren.

In der Regel werden pro 100 g Gesamtmonomere 200 bis 1000 g des Lösungsmittels eingesetzt.

Bei der Durchführung der Polymerisation in umgekehrter Emulsion wird die wäßrige Monomerenlösung in bekannter Weise in einem mit Wasser nicht mischbaren organischen Lösungsmittel, wie Cyclohexan, Toluol, Xylol, Heptan oder hochsiedenden Benzinfraktionen unter Zusatz von 0,5 bis 8 Gew.%, vorzugsweise 1 bis 4 Gew.%, bekannter Emulgatoren vom W/O-Typ emulgiert und mit üblichen radikalbildenden Initiatoren polymerisiert.

Das Prinzip der inversen Emulsionspolymerisation ist aus der US-Patentschrift 3,284,393 bekannt. Bei diesem Verfahren werden wasserlösliche Monomere oder Mischungen davon in der Wärme zu hochmolekularen Copolymerisaten polymerisiert, indem man zunächst die Monomeren oder wäßrige Lösungen davon, unter Zusatz von Wasser-in-Öl-Emulgatoren in einem mit Wasser nicht mischbaren, die zusammenhängende Phase bildenden organischen Lösungsmittel emulgiert und diese Emulsion in Gegenwart von radikalischen Initiatoren erwärmt. Die einzusetzenden Comonomeren können als solche in dem mit Wasser nicht mischbaren organischen Lösungsmittel emulgiert werden, oder sie können in Form einer wäßrigen Lösung, die zwischen 100 und 5 Gew.% Comonomere und 0 bis 95 Gew.% Wasser enthält, eingesetzt werden, wobei die Zusammensetzung der wäßrigen Lösung eine Frage der Löslichkeit der Comonomeren in Wasser und der vorgesehenen Polymerisationstemperatur ist. Das Verhältnis zwischen Wasser und der Monomerenphase ist in weiten Grenzen variabel und liegt in der Regel bei 70 : 30 bis 30 : 70.

Um die Monomerenphase in dem mit Wasser nicht mischbaren organischen Lösungsmittel zu einer Wasser-in-Öl-Emulsion zu emulgieren, werden den Gemischen 0,1 bis 10 Gewichtsprozent, bezogen auf die Ölphase eines Wasser-in-Öl-Emulgators, zugesetzt. Vorzugsweise werden solche Emulgatoren verwendet, die einen relativ niedrigen HLB-Wert aufweisen. Als Ölphase kann im Prinzip jede inerte wasserunlösliche Flüssigkeit, d.h. im Prinzip jedes hydrophobe organische Lösungsmittel, eingesetzt werden. Im allgemeinen

verwendet man im Rahmen der vorliegenden Erfindung Kohlenwasserstoffe, deren Siedepunkt im Bereich von 120 bis 350°C liegt. Diese Kohlenwasserstoffe können gesättigte, lineare oder verzweigte Paraffin-Kohlenwasserstoffe, wie sie in Erdölfraktionen vorwiegend vorliegen, sein, wobei diese auch die üblichen Anteile von Naphthenkohlenwasserstoffen enthalten können. Es können aber auch aromatische Kohlenwasserstoffe, wie beispielsweise Toluol oder Xylol, sowie die Gemische der oben genannten Kohlenwasserstoffe als Ölphase eingesetzt werden. Vorzugsweise verwendet man ein Gemisch aus gesättigten Normal- und Iso-Paraffinkohlenwasserstoffen, das bis zu 20 Gewichtsprozent Naphthene enthält.

Eine detaillierte Beschreibung des Verfahrens findet sich beispielsweise in der Deutschen Patentschrift 10 89 173 und in den US-Patentschriften 3,284,393 und 3,624,019.

Vernetzte Copolymerisate mit besonders hohem Polymerisationsgrad in den Grundketten werden erhalten, wenn man die Polymerisation in wäßriger Lösung nach dem Verfahren der sogenannten Gelpolymerisation durchführt. Dabei werden 15- bis 60%ige wäßrige Lösungen der Comonomeren mit bekannten geeigneten Katalysatoren ohne mechanische Durchmischung unter Ausnutzung des Trommsdorff-Norrisch-Effekts (Bios Final Rep. 363,22; Makromol. Chem. 1, 169 (1947) polymerisiert.

Durch Nacherhitzen der bei der Gelpolymerisation erhaltenen Polymerisatgele im Temperaturbereich von 50 bis 130°C, vorzugsweise 70 bis 100°C, können die Qualitätseigenschaften der Polymerisate noch verbessert werden.

Die auf diesem Wege hergestellten, in Form wäßriger Gallerten vorliegenden erfindungsgemäßen Copolymerisate können nach mechanischer Zerkleinerung mit geeigneten Apparaten direkt in Wasser gelöst werden und zum Einsatz gelangen. Sie können aber auch nach Entfernung des Wassers durch bekannte Trocknungsprozesse in fester Form

erhalten und erst bei ihrer Verwendung wieder in Wasser aufgelöst werden.

Die Polymerisationsreaktion wird im Temperaturbereich zwischen -60°C und 200°C, bevorzugt zwischen -10 und 120°C, durchgeführt, wobei sowohl unter Normaldruck als auch unter erhöhtem Druck gearbeitet werden kann. In der Regel wird die Polymerisation in einer Schutzgasatmosphäre, vorzugsweise unter Stickstoff, ausgeführt.

Zur Auslösung der Polymerisation können energiereiche elektromagnetische Strahlen oder die üblichen chemischen Polymerisationsinitiatoren herangezogen werden, z.B. organische Peroxide, wie Benzolperoxid, tert. Butyl-hydroperoxid, Methylethyl-keton-peroxid, Cumol-hydroperoxid, Azoverbindungen wie Azo-di-iso-butyro-nitril oder 2'-Azo-bis-(2-amidinopropan)-dihydrochlorid

$$HN{=}\underset{\displaystyle NH_2}{C}{-}C(CH_3)_2{-}N{=}N{-}C(CH_3)_2{-}\underset{\displaystyle NH_2}{C}{=}NH \cdot 2\ HCl$$

sowie anorganische Peroxiverbindungen wie $(NH_4)_2S_2O_8$ oder $K_2S_2O_8$ oder $H_2O_2$ gegebenenfalls in Kombination mit Reduktionsmitteln wie Natriumhydrogensulfit und Eisen-II-Sulfat oder Redoxsysteme, welche als reduzierende Komponente eine aliphatische und aromatische Sulfinsäure, wie Benzolsulfinsäure und Toluolsulfinsäure oder Derivate dieser Säuren enthalten, wie sie z.B. Mannichaddukte aus Sulfinsäure, Aldehyden und Amino-Verbindungen, wie sie in der Deutschen Patentschrift 13 01 566 beschrieben sind. Pro 100 g Gesamtmonomeren werden in der Regel 0,03 bis 2 g des Polymerisationsinitiators eingesetzt.

Es ist weiterhin bekannt, den Polymerisationsansätzen kleine Mengen von sogenannten Moderatoren zuzusetzen, die den Verlauf der Reaktion dadurch harmonisieren, daß sie das Reaktionsgeschwindigkeits-Zeitdiagramm abflachen. Sie führen damit zu einer Verbesserung der Reproduzierbarkeit der Reaktion und ermöglichen damit, einheitliche Produkte

mit äußerst geringen Qualitätsabweichungen herzustellen. Beispiele für geeignete Moderatoren dieses Typs sind Nitrilo-tris-propionylamid oder Monoalkylamine, Dialkylamine oder Trialkylamine, wie z.B. Dibutylamin. Auch bei der Herstellung der erfindungsgemäßen Copolymerisate können solche Moderatoren mit Vorteil verwendet werden. Weiterhin können den Polymerisationsansätzen sogenannte Regulatoren zugesetzt werden; das sind solche Verbindungen, die das Molekulargewicht der hergestellten Polymerisate beeinflussen. Brauchbare bekannte Regulatoren sind z.B. Alkohole wie Methanol, Ethanol, Propanol, Isopropanol, n-Butanol, sec.-Butanol und Amylalkohole, Alkylmercaptane wie z.B. Dodecylmercaptan und tert.-Dodecylmercaptan, Isooctylthioglycolat und einige Halogenverbindungen wie z.B. Tetrachlorkohlenstoff, Chloroform und Methylenchlorid.

Die erfindungsgemäßen Copolymerisate lassen sich mit mehrwertigen Metallkationen, insbesondere solchen der dritten bis achten Gruppe sowie der zweiten Nebengruppe des periodischen Systems der Elemente, zu Chelaten umsetzen. Selbst die Metalle der zweiten Hauptgruppe zeigen noch eine deutliche Chelatisierungswirkung. Hierzu werden die genannten Copolymerisate mit Salzen dieser Metalle vereinigt, wobei in der Regel pro g-Äquivalent des Metallkations 1 bis 100 g-Äquivalent des Copolymerisats zusammengebracht werden. Die Reaktion wird in der Regel in Wasser oder in einem wassermischbaren organischen Lösungsmittel oder in Mischungen davon, vorzugsweise aber in Wasser, durchgeführt, wobei die Metallkationen in Form einer wäßrigen Lösung eines wasserlöslichen Salzes des betreffenden Metalls eingesetzt werden. Die Chelatisierungsreaktion tritt je nach Art des Kations im neutralen oder alkalischen pH-Bereich oder bei sehr aktiven Kationen (wie z.B. bei Titan oder Zirkon) bereits im stark sauren Bereich ein. Sie verläuft bereits bei Zimmertemperatur mit hoher Geschwindigkeit und ist in den meisten Fällen, wie z.B. bei Ti, Zr, Fe oder Al nach wenigen Sekunden bis Minuten, in selteneren Fällen nach einigen

Stunden (wie z.B. bei Kadmium), vollständig abgeschlossen.
Bei der Chelatisierungsreaktion wird die der zugesetzten Menge mehrwertiger Metallionen äquivalente Menge der für $X^+$ stehenden Kationen freigesetzt, und über die mehrwertigen Metallionen kommt es zu einer Vernetzung der Polymerenstränge.

Dieses Chelatisierungsvermögen der oben definierten - Polymerisate kann einerseits dazu ausgenutzt werden, die betreffenden Kationen fest zu binden und zu maskieren, um sie zu eliminieren oder unwirksam zu machen. Andererseits weisen die Metallchelate der Polymeren selbst höchst - wertvolle technische Eigenschaften auf. Besonders auffällig ist die extrem hohe Viskosität schon sehr verdünnter wäßriger Lösungen der chelatisierten Copolymerisate.

Die Substituenten der Formel

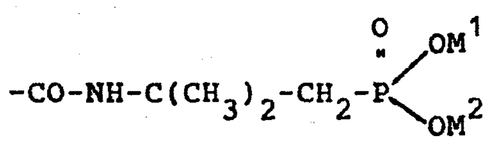

vermitteln den erfindungsgemäßen Polymerisaten ein hohes Maß an Hydrophilie. Unvernetzte erfindungsgemäße Polymerisate sind daher wasserlöslich, vernetzte Polymerisate quellbar mit hohem Wasseraufnahmevermögen. Zusätzlich weisen die erfindungsgemäßen Polymerisate eine hohe Dispergierwirkung und antikorrosive Eigenschaften auf.

Durch die Kombination der genannten wertvollen Eigenschaften eröffnen sich für die neuen Produkte zahlreiche technische Einsatzmöglichkeiten, wobei sich überraschende technische Vorteile ergeben. So können die erfindungsgemäßen Produkte mit erheblichem technischen Vorteil z.B. als Färberei- und Textilhilfsmittel eingesetzt werden. Es ergeben sich z. B. erhebliche Vorteile durch den Einsatz erfindungsgemäßer Copolymerisate beim Färben von cellulosehaltigen Fasermaterialien nach dem Klotz-Kaltverweil-Verfahren. Durch den Zusatz der erfindungsgemäßen Copolymerisate wird die Flottenaufnahme des zu färbenden cellulosehaltigen Textilmaterials wesentlich erhöht, was zu einer besseren Durchfärbung selbst voluminöser textiler Flächengebilde, wie z.B. Trikot, führt. Dadurch resultieren Färbungen von hoher Egalität und hervorragendem Warenbild. Beim Einsatz der erfindungsgemäßen neuen Copolymerisate in der Pigmentfärberei werden Färbungen hoher Egalität und Farbtiefe erhalten.

Die erfindungsgemäßen Copolymerisate bewirken beim Zusatz zu Dispersionsfarbstoffen enthaltenden Klotzflotten, wie sie zum Färben von Polyestermaterialien verwendet werden, eine hervorragende Egalität und Brillanz der damit fertiggestellten Färbungen.

Die hohe Viskosität wäßriger Lösungen der erfindungsgemäßen Copolymerisate und ihrer Metallchelate ermöglicht ihren Einsatz als Verdickungsmittel in wäßrigen Anstrich- oder Druckfarben bzw. in Bindemitteldispersionen bei der Imprägnierung und Beschichtung textiler Flächengebilde sowie als Hilfsmittel in der Erdölindustrie wie z.B. als Bohrspül- oder Zementierungsadditive, in Polymeren für die Sekundär- und Tertiärförderung.

Besonders wertvoll sind die erfindungsgemäßen Copolymerisate für das Verdicken von Säurefluids, die für die Stimulierung von Erdöl- und Erdgaslagerstätten nach dem an sich bekannten Verfahren der Drucksäuerung eingesetzt werden. Bei diesem Stimulationsverfahren wird eine wäßrige Säure unter hohem Druck durch die Förderbohrung oder durch eine Hilfsbohrung in die Lagerstätte eingepreßt. In der erdölführenden Formation soll dadurch ein hoher Druck aufgebaut werden, der ausreicht, neue Frakturen in das Gestein zu sprengen. Die Säure ätzt beim Eindringen in die entstandenen Risse deren Oberfläche unregelmäßig an,

wodurch bei Druckentlastung kein vollständiges Schließen der Frakturen mehr erfolgt sondern geätzte Kanäle offen bleiben, die ein verbessertes Fließen des Rohöls bzw. Erdgases ermöglichen. Voraussetzung für das Gelingen der Drucksäuerung ist es, daß die eingepumpte Säure nicht zu schnell durch natürliche Poren und Spalten der Formation abfließen kann, weil sonst die normale Pumpenleistung nicht ausreicht, den erforderlichen hohen Sprengdruck in der Lagerstätte zu erzeugen.

Es ist daher von großem Vorteil, die Viskosität der wäßrigen Säure zu erhöhen, weil dies das zu schnelle Abfließen der Säure in das Gestein verhindert und bei gegebener Pumpenleistung in der Lagerstätte ein wesentlich höherer Druck erzeugt werden kann. Die erfindungsgemäßen Copolymerisate und insbesondere deren Metallchelate eignen sich nun hervorragend als Verdicker für wäßrige Säurefluids, die für das Drucksäuerungsverfahren eingesetzt werden sollen. Sie werden für diesen Zweck den wäßrigen Säuren in Mengen von 0,1 bis 5,0 %, vorzugsweise von 0,2 bis 1,5 %, zugesetzt.

Eine besonders vorteilhafte Ausgestaltung des Drucksäuerungsverfahrens wird ermöglicht durch die hohe Geschwindigkeit der Chelatisierungsreaktion zwischen den erfindungsgemäßen Copolymerisaten und chelatisierbaren Metallkationen. Man verfährt in der Weise, daß man der Lösung des nichtchelatisierten Copolymerisats in der Säure erst unmittelbar vor dem Eintritt des Säurefluids in die Bohrung die Metallkationen in Form einer Metallsalzlösung oder einer Kationen abspaltenden Chelatlösung zudosiert.

Die Menge des bei diesem Verfahren zudosierten Metallsalzes richtet sich nach der Konzentration des Polymerisats in der Säure. Man arbeitet so, daß pro Phosphonsäureäquivalent des Copolymerisats 1 bis $^{1}/100$ g-Äquivalent des

Metallkations zudosiert werden.

Das Phosphonsäureäquivalent P errechnet sich aus dem Gewichtsprozent-Anteil a der Baugruppe der Formel II im Copolymerisat nach der Gleichung

$$P = \frac{207{,}2 \cdot 100}{a} .$$

Bei einem Copolymerisat, das z.B. 10 % Baugruppen der Formel II enthält, beträgt P somit 2072, und bei Einsatz von z.B. Zirkon, dessen Äquivalentgewicht $^{91}/4$ = 22,75 beträgt, werden mithin zur Chelatbildung auf 2072 g des Polymers 22,75 bis 0,23 g Zirkonkationen entsprechend ca. 59 bis 0,59 g Zirkontetrachlorid zugesetzt.

Weiterhin können die erfindungsgemäßen Copolymerisate als Dispergiermittel als Scale Inhibitoren, als Steinverhinderungsmittel sowie als Flockungs- und Filtrierhilfsmittel, des weiteren als Hilfsmittel bei der Papierherstellung und als Korrosionsschutzmittel eingesetzt werden.

Ein weiteres Einsatzgebiet besteht in der Herstellung hoch wasserfester Überzüge und Polituren auf Holz, Kautschuk-, Glas-, Fliesen-, Kunststoff- und Linoleumoberflächen durch Kombination geeigneter wäßriger Polymerdispersionen mit den erfindungsgemäßen, durch Zusatz mehrwertiger Metallionen vernetzten Copolymeren.

Die erfindungsgemäßen Polymeren können auch als Kosmetikgrundstoffe sowie als Hilfsmittel bei der Lederherstellung eingesetzt werden. Aufgrund der Fähigkeit der Phosphonsäuregruppierung, Metallchelate zu bilden, können die erfindungsgemäßen Polymerisate auch zur Bindung mehrwertiger Metallkationen verwendet oder über derartige Kationen vernetzt werden. Die erfindungsgemäßen Polymerisate sind auch als Zusätze zu Reinigungsmitteln insbesondere bei Metalloberflächen, sowie als Modifizierungsmittel für Aminoplastharze geeignet.

Erfindungsgemäße Copolymerisate mit Molgewichten von weniger als 50000 sind darüber hinaus als sogenannte Nachgerbstoffe, insbesondere für Chromleder, geeignet.

Die zur Herstellung der erfindungsgemäßen Homo- und Copolymerisate erforderliche 2-Acrylamido- bzw. 2-Methacrylamido-2-methylpropan-phosphonsäure der Formel IIa

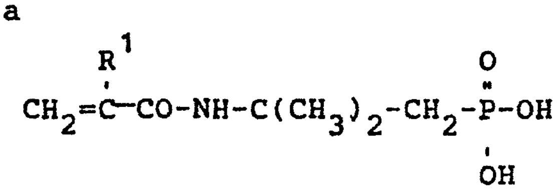

(IIb)

sowie deren Salze lassen sich durch Umsetzung von Acrylnitril bzw. Methacrylnitril mit 1 mol Wasser und 2-Methylprop-1-en-1-phosphonsäure bzw. der isomeren 2-Methylprop-2-en-1-phosphonsäure in Gegenwart starker Säuren wie z.B. $H_2SO_4$, $H_3PO_4$, $HClO_4$ oder HF nach dem bekannten Schema und unter den an sich bekannten Bedingungen der Ritter-Reaktion herstellen.

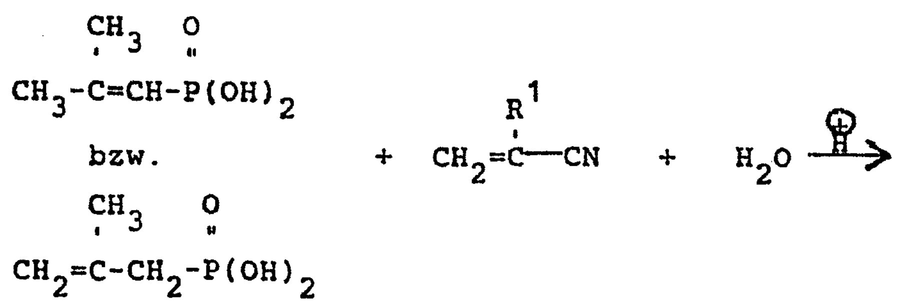

bzw.

(IIa)

Die 2-Methyl-propen-1-yl- bzw. 2-Methyl-propen-2-yl-phosphonsäuren lassen sich durch Hydrolyse der entsprechenden Phosphonsäurechloride bequem herstellen. Die isomeren

2-Methyl-propenphosphonsäuredichloride sind bereits ausführlich in der Literatur beschrieben worden (U.S. Patent 2,471,472; L. Maier, Phosphorus 5, 223 (1975) ).

Die Salze der Phosphonsäure IIa werden nach dem Fachmann geläufigen Verfahren z. B. durch Umsetzung mit äquivalenten Mengen eines Metallhydroxids oder Carbonats in wäßriger oder alkoholischer Lösung hergestellt.

Die folgenden Ausführungsbeispiele zeigen die Herstellung erfindungsgemäßer Polymerisate. Alle %-Angaben beziehen sich auf Gewichtsmengen.

Die in den Ausführungs- und Tabellenbeispielen benutzten Abkürzungen haben folgende Bedeutung:

| | |
|---|---|
| AMPP | 2-Acrylamido-2-methyl-propanphosphonsäure |
| MAMPP | 2-Methacrylamido-2-methyl-propanphosphonsäure |
| AM | Acrylamid |
| VIMA | N-Vinyl-N-methyl-acetamid |
| VIPY | N-Vinylpyrrolidon |
| AIBS | 2-Acrylamido-2-methyl-propansulfonsäure |
| VA | Vinylacetamid |
| VIFA | Vinylformamid |
| VSS-Na | Natriumvinylsulfonat |
| Styrol SS | Styrolsulfonsäure |
| VPS | Vinylphosphonsäure |
| VPE | Vinylphosphonsäure-methylester |
| AS | Acrylsäure |
| MAS | Methacrylsäure |
| VAc | Vinylacetat |
| ACN | Acrylnitril |
| VPA | Vinylphosphonsäureanhydrid |
| DADMAC | Diallyl-dimethyl-ammoniumchlorid |
| MASA | Maleinsäureanhydrid |

Die in den Tabellen angegebenen Zahlenwerte der Zusammensetzung sind Gew.%-Angaben.

**Beispiel 1:**
**(Emulsionspolymerisation)**

7,2 g ®Arkopal N 100 (nichtionischer Emulgator auf der Basis eines oxethylierten Phenolderivats) und 19,4 g ®Span 80 (nichtionischer Emulgator auf Basis eines Zuckeralkohol-Stearats) werden in ®Isopar M (technisches Gemisch von Isoparaffin mit einem Siedepunkt von ca. 200-240°C) aufgelöst und die resultierende Lösung in ein 1-l-Reaktionsgefäß eingeschüttet, das mit einem Rührer, Thermometer und einem Stickstoffeinlaß versehen ist. Dann wird eine Monomerlösung durch Auflösung von 97,2 g Acrylamid, 10,2 g AMPP und 1,1 g Vinylphosphonsäuremonomethylester (VPE) in 105 ml Wasser hergestellt. Der pH-Wert der Monomerlösung wird auf 8,5 mit Ammoniak (25%ig) eingestellt. Unter schnellem Rühren wird die wäßrige Monomerlösung der organischen Phase zugefügt. Das Reaktionsgefäß wird evakuiert und anschließend mit Stickstoff gefüllt. Nun wird die Lösung von 0,0275 g Ammoniumpersulfat in 3 ml Wasser dem Gemisch zugefügt und damit die Polymerisation gestartet. Die Reaktion dauert 1 1/2 Stunden, die Reaktionstemperatur wird zwischen 30 und 40°C gehalten. Es resultiert eine stabile Emulsion, die unter Verwendung handelsüblicher oberflächenaktiver Mittel in an sich bekannter Weise in Wasser invertiert werden kann.
Die resultierende Polymerlösung hat einen K-Wert von 128,9.

**Beispiel 2:**
**(Emulsionspolymerisation)**

7,2 g ®Arkopal N 100 (nichtionischer Emulgator auf der Basis eines oxethylierten Phenolderivats) und 19,4 g ®Span 80 (nichtionischer Emulgator auf Basis eines Zuckeralkohol-Stearats) werden in ®Isopar M (technisches Gemisch von Isoparaffin mit einem Siedepunkt von ca. 200-240°C) aufgelöst und die resultierende Lösung in

ein 1-l-Reaktionsgefäß eingeschüttet, das mit einem Rührer, Thermometer und einem Stickstoffeinlaß versehen ist. Dann wird eine Monomerlösung durch Auflösung von 87,5 g Acrylamid und 21,8 g AMPP in 110 ml Wasser hergestellt. Der pH-Wert der Monomerlösung wird auf 8,5 mit Ammoniak (25%ig) eingestellt. Unter schnellem Rühren wird die wäßrige Monomerlösung der organischen Phase zugefügt. Das Reaktionsgefäß wird evakuiert und anschließend mit Stickstoff gefüllt. Nun wird eine Lösung von 0,0275 g Ammoniumpersulfat in 3 ml Wasser dem Gemisch zugefügt und damit die Polymerisation gestartet. Die Reaktion dauert 1 1/2 Stunden, die Reaktionstemperatur wird zwischen 30 und 40°C gehalten. Es resultiert eine stabile Emulsion, die unter Verwendung handelsüblicher oberflächenaktiver Mittel in an sich bekannter Weise in Wasser invertiert werden kann.

Die resultierende Polymerlösung hat einen K-Wert von 198,5.

Analog dieser Verfahrensweise lassen sich auch die Copolymerisate der folgenden Tabellen I und II herstellen.

Tabelle I

| Nr. | AMPP | AM | AMPS | Vinylamid | $CH_2=C(R^1)-COOR^x$ | c. | d. | e. | MAMPP |
|---|---|---|---|---|---|---|---|---|---|
| 3 | 10 | 85 | 5 | | | | | | |
| 4 | 30 | 60 | | 5 VIMA | | 5 VPS | | | |
| 5 | 20 | 60 | | | 10 AS | | 10 Acryl-nitril | | |
| 6 | 40 | 50 | | 10 Vinyl-pyrrolidon | | | | | |
| 7 | 25 | 50 | 5 | | 10 MAS | 5 VPS | 5 Styrol | | |
| 8 | 15 | 60 | | 5 VIFA | | | 20 Vinyl-acetat | | |
| 9 | 5 | 90 | | | | | | 5 DADMAC | |
| 10 | 10 | 70 | | | 10 $R^1 = H$, $R^x = -CH_2-CH_2-OH$ | | 10 ACN | | |
| 11 | 15 | 80 | | | | | | 5 VPA | |
| 12 | 50 | 40 | | 5 VAC | | | 5 ACN | | |
| 13 | 20 | 60 | | 5 VIMA | 10 $R^1 = H$, $R^x = C_2H_5$ | | | | 5 MAMPP |
| 14 | 5 | 70 | 10 | | 10 MAS | 5 VPS | | | |
| 15 | 5 | 80 | 15 | | | | | | |
| 16 | 15 | 60 | 10 | 15 VIMA | | | | | |
| 17 | 5 | 75 | | | 10 AS | | 10 Vinyl-acetat | | |
| 18 | 1 | 85 | 4 | | | 5 VPS | | | 5 MAMPP |
| 19 | 10 | 65 | | | 5 AS | | | | |

Tabelle II

| Nr. | AM | AMPP | AS | AMPS | VPS | K-Wert |
|---|---|---|---|---|---|---|
| 20 | 95 | 5 | | | | 190,5 |
| 21 | 90 | 10 | | | | 198,5 |
| 22 | 80 | 20 | | | | 198,9 |
| 23 | 70 | 30 | | | | 191,5 |
| 24 | 65 | 5 | | 30 | | 280,4 |
| 25 | 65 | 2 | | 30 | 3 | 195,5 |
| 26 | 55 | 2 | 10 | 30 | 3 | 231,4 |

Beispiel 27:
(Gelpolymerisation)

In einem Polymerisationskolben von 1 l Inhalt, ausgestattet mit Planschliffdeckel, Rührer, Thermometer und Gaseinleitungsrohr wird durch Auflösung von 60 g Arylamid, 30 g AMPP und 10 g VPE in 250 g Wasser eine Monomerlösung hergestellt. Der pH-Wert wird mit Ammoniak (25%ig) auf 8,5 eingestellt. Unter Rühren und Einleiten von Stickstoff werden nun 1 g einer wäßrigen 10%igen Dibutylamin-HCl-Lösung und 0,1 g Ammoniumpersulfat zugegeben. Man läßt unter Stickstoff-Einleitung noch 3 Minuten bei erhöhter Drehzahl rühren. Die Stickstoff-Einleitung wird beendet, Einleitungsrohr und Rührer werden hochgezogen. Nach einer Induktionszeit von 30 Minuten setzt die Polymerisation ein, wobei die Temperatur von 20°C auf 78°C ansteigt und die Lösung in ein formstabiles Gel übergeht.

Der K-Wert beträgt 203,9.

Beispiel 28:
(Fällungspolymerisation)

In einem Polymerisationskolben von 1 l Inhalt, ausgestattet mit Rührer, Rückflußkühler, Thermometer, Tropftrichter und Gaseinleitungsrohr werden in 440 ml tert.-Butanol 49,7 g Acrylamid, 7,1 g AIBS, 10,7 g AMPP und 3,6 g Methacrylsäure (MAS) gelöst. Unter Rühren und Einleiten von Stickstoff wird die Monomerlösung auf 50°C angeheizt und 1 g Azoisobutyronitril, gelöst in 5 ml DMF, zugetropft. Nach einer Induktionszeit von 30 Minuten setzt die Polymerisation ein, die Reaktionstemperatur steigt auf 68°C, und das Polymerisat fällt aus. Es wird noch 2 Stunden bei 80°C nachgeheizt. Das Copolymerisat kann durch Absaugen und Trocknen isoliert werden. Es kann jedoch auch das Lösungsmittel direkt unter vermindertem Druck abdestilliert werden. Man erhält das Polymere in Form eines weißen leichten Pulvers, das sich gut in Wasser löst und einen K-Wert von 195,0 hat.

Beispiel 29.
(Lösungspolymerisation)

In einem Polymerisationskolben von 1 l Inhalt, ausgestattet mit Planschliffdeckel, Rührer, Thermometer und Gaseinleitungsrohr werden in 200 g Wasser 20 g AIBS und 50 g AMPP gelöst und mit Ammoniak (25%ig) neutralisiert. Dann werden 10 g Acrylamid und 10 g VPE zugesetzt. Der pH-Wert wird auf 8,5 eingestellt und 10 g N-Vinyl-N-methyl-acetamid zugefügt. Unter Rühren und Einleiten von Stickstoff wird das Reaktionsgemisch auf 60°C erhitzt. Nun gibt man noch 1 g einer wäßrigen 10%igen Dibutylamin-HCl-Lösung und 0,1 g Ammoniumpersulfat zu. Die Reaktion dauert etwa 30 Minuten, wobei die Temperatur auf 70°C ansteigt. Das Reaktionsgemisch wird viskos. Es wird unter Rühren noch 2 Stunden bei 80°C nachgeheizt. Man erhält eine klare, hochviskose Lösung.

Der K-Wert beträgt 136,1.

In analoger Weise lassen sich auch beispielsweise die Copolymerisate der folgenden Tabelle III herstellen.

Tabelle III

| Nr. | AMPP | MAPP | a | b | c | d | e | |
|---|---|---|---|---|---|---|---|---|
| 30 | 50 | | 20 AMPS | 10 VIMA | 10 VPE | | | 10 AM |
| 31 | 50 | | 50 AMPS | | | | | |
| 32 | 90 | | 8 AM | 2 VIMA | | | | |
| 33 | 5 | | 10 N-Methylol-AM | 50 VIMA | | 35 VA | | |
| 34 | 15 | | 85 N-(γ-Dimethylamino-propyl)-acrylamid | | | | | |
| 35 | 25 | | 25 ß-Hydroxyethyl-acrylat | | | | | |
| 36 | 7 | 3 | 90 ß-Dimethylamino-ethyl-acrylat | | | | | |
| 37 | 1 | | 9 ß-Trimethylammonium-ethyl-acrylat-hydro-chlorid | | | | 90 DADMAC | |
| 38 | 80 | | 10 AS | | | 10 Sty-rol | | |
| 39 | 70 | | 20 AM | 10 VIFA | | | | |
| 40 | 65 | | 10 AM | | | 15 Vinyl-methyl-ether | 10 MASA | |
| 41 | 30 | | | 70 VIPY | | | | |
| 42 | 40 | | 40 MAS | | | 20 VA | | |
| 43 | 95 | | | | 5 VPS | | | |
| 44 | 98 | | | | | 2 ACN | | |

| Nr. | AMPP | MAPP | a | b | c | d | e | |
|---|---|---|---|---|---|---|---|---|
| 45 | 100 | | | | | | | |
| 46 | 10 | | 50 AM | 40 VA | | | | |
| 47 | 30 | | 50 AM | | 20 VPE | | | |

**Beispiel 48**
**(Fällungspolymerisation)**

In einem Polymerisationskolben von 1 l Inhalt, ausgestattet mit Rührer, Rückflußkühler, Thermometer, Tropftrichter und Gaseinleitungsrohr werden in 440 ml tert.-Butanol 15 g entionisiertes Wasser, 46,2 g AM, 21,3 g AS, 3,6 AMPP und 1 g Tetraallyloxethan gelöst. Unter Rühren und Einleiten von Stickstoff wird die Monomerlösung auf 50°C angeheizt und 1 g Azoisobutyronitril zugesetzt. Nach einer Induktionszeit von ca. 30 Min. setzt die Polymerisation ein, die Temperatur steigt auf 77°C an, und das Polymerisat fällt aus. Es wird noch 2 h bei 80°C nachgeheizt. Das Copolymerisat kann durch Absaugen und Trocknen isoliert werden. Es kann jedoch auch das Lösungsmittel direkt unter vermindertem Druck abdestilliert werden. Man erhält das Polymere in Form eines weißen leichten Pulvers. Von dem Produkt wird in destilliertem Wasser eine 0,2 Gew.%ige Lösung hergestellt und mit einer Base MOH auf pH 8,0 eingestellt. Die Lösung hat eine Viskosität von 6140 mPa s (Brookfield LVT, Spindel 3,60 rpm, 20°C).

In analoger Weise lassen sich die Polymerisate der Tabelle IV herstellen. Die Polymerisate der Beispiele 50 und 51 wurden mit 30 % Mol NaOH verseift.

..

T a b e l l e IV

| Nr. | AMPP | AM | AS | AIBS | Viskosität /mPa s/ |
|---|---|---|---|---|---|
| 48 | 5 | 64 | 29,6 | | 6140 * |
| 49 | 10 | 60 | 30 | | 2650 |
| 50 | 5 | 95 | | | 5620 + |
| 51 | 10 | 90 | | | 4320 + |
| 52 | 5 | 70 | | 25 | 4300 |
| 53 | 10 | 70 | | 20 | 2060 |
| 54 | 5 | 95 | | | 534 |
| 55 | 10 | 90 | | | 1044 |
| 56 | 5 | 50 | 45 | | 1470 |
| 57 | 10 | 50 | 40 | | 804 |

+ mit 30 Mol % NaOH verseift

*unter Zusatz von 1,4 Gew.% Tetraallyloxethan

Beispiel 58

a) Eine Erdgasbohrung in West Texas wird für die Drucksäuerung ausgewählt. Die Bohrung hat ein Produktionsintervall zwischen einer Tiefe von 2940 bis 2970 Meter. Die Sohlen-Temperatur in diesem Intervall beträgt 76 bis 77°C. Die Durchlässigkeit der Formation beträgt durchschnittlich 0,1 md (millidarcy). Die spontane Produktivität der Bohrung beträgt vor der Behandlung ca. 89 $m^3$ Gas und ca. 500 l Kondensat pro Tag.

Das einzusetzende Drucksäuerungsfluid wird hergestellt, indem man 150000 Liter 15%ige Salzsäure, die 300 l (0,2 Gew.%) eines handelsüblichen Korrosionsinhibitors enthält, mit 1700 kg einer Wasser-in-Öl-Emulsion eines Copolymers aus 33,5 Gew.% Acrylamid, 47,8 Gew.% AIBS, 9,2 Gew.% AMPP und 9,6 Gew.% VIPY versetzt, die einen Polymergehalt von 30 Gew.% hat. Zusätzlich werden der Mischung 300 l (0,2 Gew.%) eines nichtionischen fluorhaltigen Netzmittels zugesetzt. Die Mischung wird eine Stunde gelagert und stellt dann eine homogene Flüssigkeit mit einer Viskosität von etwa 32 mPa.s dar, gemessen bei einem Scher-Gefälle von 511 $sec.^{-1}$ in einem Fann-35 Viskosimeter. Dieses Behandlungsfluid wird in die oben bezeichnete Tiefbohrung eingepumpt, wobei gleichzeitig pro 150 l der Behandlungsflüssigkeit 300 ml einer 10 gew.%igen Zirkontetrachlorid-Lösung in 15%iger Salzsäure eindosiert werden. Die Injektionsgeschwindigkeit des Behandlungsfluids beträgt etwa 2000 l pro Minute bei einem an der Oberfläche gemessenen Behandlungsdruck von 420 bar. Nach etwa 75 bis 80 Minuten ist die gesamte Behandlungsflüssigkeit in das Bohrloch eingepreßt, und dieses wird für 6 Stunden verschlossen, um der Säure Gelegenheit zu geben, mit dem Gestein zu reagieren. Nach dieser Zeit wird der Druck am Kopf der Bohrung entlastet und die Förderung wiederhergestellt. Eine Messung der Förderrate ergibt eine Zunahme der Produktivität der Bohrung auf 600 $m^3$ Gas pro Tag.

b) Das im Abschnitt a) eingesetzte Copolymerisat wurde wie folgt hergestellt:
43,2 kg ®Arkopal N 100 (Nichtionischer Emulgator auf der Basis eines oxethylierten Phenolderivats) und 116,4 kg ®Span 80 (Nichtionischer Emulgator auf Basis eines Zuckeralkohol-Stearats) werden in 600 kg ®Isopar M (Technisches Gemisch von Isoparaffin mit einem Siedepunkt von ca 200-240°C) aufgelöst und die resultierende Lösung in ein 1 Liter Reaktionsgefäß eingeschüttet, das mit einem Rührer, Thermometer und einem Stickstoffeinlaß versehen ist. Dann wird eine Monomerlösung durch Auflösung von 227 kg Acrylamid, 324 kg AIBS, 62,1 kg AMPP und 65 kg VIPY in 630 l Wasser hergestellt.

Der pH-Wert der Monomerlösung wird auf 8,5 mit Ammoniak (25%ig) eingestellt. Unter schnellem Rühren wird die wässrige Monomerlösung der organischen Phase zugefügt. Das Reaktionsgefäß wird evakuiert und anschließend mit Stickstoff gefüllt. Nun wird die Lösung von 165 g Ammoniumpersulfat in 18 l Wasser dem Gemisch zugefügt und damit die Polymerisation gestartet. Die Reaktion dauert 1 1/2 Stunden, die Reaktionstemperatur wird zwischen 30 und 40°C gehalten. Es resultiert eine stabile Emulsion, die unter Verwendung handelsüblicher oberflächenaktiver Mittel in an sich bekannter Weise in Wasser invertiert werden kann. Die resultierende Polymerlösung hat einen K-Wert von 140,1.

Die folgenden anwendungstechnischen Beispiele zeigen das Viskositätsverhalten und die Chelatbildung von Lösungen erfindungsgemäßer Copolymerisate.

Die Versuche gestatten die Bestimmung der für die praktische Anwendung relevanten Viskositätsgrößen.

Beispiel 59:

In einem Becherglas werden 150 ml 15%ige Salzsäure vorgelegt und unter Rühren bei 20°C 1,7 g einer Wasser-in-Öl-Emulsion eines Copolymerisats aus 35 % Acrylamid, 50 % AIBS, 5 % AMPP und 10 % VIPY, die einen Polymerengehalt von 30 % hat, gelöst. Man rührt noch 10 Minuten bei 20°C weiter und erhält eine homogene 0,34%ige Lösung des Copolymerisats, die eine Viskosität von 32 mPa.s, gemessen in einem Rotationsviskosimeter, bei einem Schergefälle von 515 $sec^{-1}$,aufweist.

Nun wird der sauren Copolymerisatlösung 0,3 ml einer 10%igen Zirkontetrachlorid-Lösung in 15%iger Salzsäure zugefügt entsprechend einer Zusatzmenge von $7,7 \cdot 10^{-3}$ % Zirkonion, bezogen auf die gesamte saure Polymerisatlösung bzw. 2,3 % Zirkonion, bezogen auf die eingesetzte Menge des Copolymerisats.

Mit dem Zirkonzusatz wird eine Stoppuhr gestartet und die Zeit gestoppt, die bis zur Ausbildung einer viskoelastischen Gelstruktur vergeht. Im vorliegenden Fall sind dies 5 Sekunden.

In analoger Weise können die in der folgenden Tabelle aufgeführten erfindungsgemäßen Copolymerisate untersucht werden, wobei die angegebenen Werte erhalten werden.

Tabelle V

| Anwendungs-beispiel No. | Polymerisat aus Beispiel No/ Polymerkonzen-tration (%) | Säure / Konzentration (%) | Metallkation/ Zusatzmenge (%) bezogen auf Copolymerisat | Viskosität vor Metall-Zusatz ( mPa.s ) | Gelierungszeit (sec) |
|---|---|---|---|---|---|
| 59 | 58/0,34 | HCl / 15 | Zr / 2,3 | 32 | 5 |
| 60 | 5/0,5 | HCl / 15 | Zr /0,2 | 15 | 15 |
| 61 | 5/0,5 | HCl / 15 | Zr /2,0 | 15 | 2 |
| 62 | 25/0,6 | HCl / 15 | Zr /0,5 | 24 | 30 |
| 63 | 25/0,6 | HCl / 15 | Zr /1,5 | 24 | 10 |
| 64 | 53/0,58 | HCl / 15 | Zr /1,0 | 22 | 10 |
| 65 | 53/0,58 | HCl / 15 | Zr /2,0 | 22 | 1 |
| 66 | 25/0,05 | HCl / 15 | Zr /0,001 | 6 | 600 |
| 67 | 25/1,0 | HCl / 15 | Zr /0,1 | 30 | 8 |
| 68 | 25/0,6 | $H_2SO_4$/10 | Zr /0,5 | 23 | 7 |
| 69 | 25/0,6 | $H_2SO_4$/5 | Zr / 0,5 | 24 | 8 |
| 70 | 25/0,6 | $HNO_3$/5 | Zr / 0,5 | 22 | 38 |
| 71 | 25/0,6 | $H_3PO_4$/15 | Zr / 0,5 | 20 | 20 |
| 72 | 25/0,6 | HCl /1,0 | Zr / 0,5 | 28 | 12 |
| 73 | 25/0,6 | $H_2SO_4$/40 | Zr / 0,5 | 20 | 4 |
| 74 | 25/0,6 | $H_3PO_4$/60 | Zr / 0,5 | 21 | 8 |
| 75 | 25/0,6 | HCl /15 | Ti / 0,3 | 24 | 6 |
| 76 | 25/0,6 | HCl /15 | Ti / 0,1 | 24 | 15 |

**Beispiel 77:**

Ein Copolymerisat aus 50 Gewichtsteilen 2-Acrylamido-2-methylpropanphosphonsäure und 50 Gewichtsteilen Acrylsäure wurde durch radikalisch initiierte Lösungspolymerisation in einem Wasser/Isopropanol-Gemisch bei 85°C hergestellt.

Das resultierende Copolymerisat mit einem K-Wert von 23 (nach Fikentscher) wurde gemäß NACE-Standard TM-03-74 (NACE - National Association of Corrosion Engineers 1440 South Creek, Houston, TX) als Scale Inhibitor zur Verhinderung von Calciumsulfat und Calciumcarbonat-Ausfällungen in wäßrigen Lösungen geprüft.

Bei Zusatz von 10 ppm Polymer gemäß Testanordnung wurde ein guter handelsüblicher Scale Inhibitor auf Basis eines Polyacrylats gegen ein erfindungsgemäßes Copolymerisat obengenannter Zusammensetzung geprüft.

| | Copolymere AMPP-Acrylsäure | Handelsprodukt |
|---|---|---|
| CA-sulfat Retentionswert | 5120 mg/l | 3833 mg/l |
| Ca-carbonat Retentionswert | 3819 mg/l | 2965 mg/l |

Mit erfindungsgemäßen Copolymerisaten anderer Zusammensetzung wurden folgende Ca-sulfat- und Ca-carbonat-Retentionswerte erhalten.

| AMPP | AS | KW | $CaSO_4$ | $CaCO_3$ |
|---|---|---|---|---|
| 80 | 20 | 21 | 4910 | 3900 |
| 60 | 40 | 18 | 4250 | 3450 |
| 90 | 10 | 16 | 4830 | 3300 |

Beispiel 78:

In einem Polymerisationskolben von 1 Liter Inhalt, ausgestattet mit Planschliffdeckel, Rührer, Thermometer und Gaseinleitungsrohr wird durch Auflösung von 80 g Acrylsäure, 10 g AMPP, 10 g Vinylphosphonsäuremonomethylester und 0,1 g Methylenbisacrylamid in 250 g Wasser eine Monomerlösung hergestellt. Der pH-Wert wird mit Ammoniak (25%ig) auf 8,5 eingestellt. Unter Rühren und Einleiten von Stickstoff werden nun 1 g einer wäßrigen 10%igen Dibutylamin-HCl-Lösung und 0,1 g Ammoniumpersulfat zugegeben. Man läßt unter Stickstoff-Einleitung noch 3 Minuten bei erhöhter Drehzahl rühren. Die Stickstoff-Einleitung wird beendet, Einleitungsrohr und Rührer werden hochgezogen. Nach einer Induktionszeit von 30 Minuten setzt die Polymerisation ein, wobei die Temperatur von 20°C auf 78°C ansteigt und die Lösung in ein formstabiles Gel übergeht.

Nach Zerkleinerung des Gels in einem Extruder wird bei 90°C getrocknet und dann gemahlen. Man erhält ein pulverförmiges Polymerisat, welches sich durch extremes Wasserbindevermögen unter Quellung auszeichnet. Man rührt dazu 1 g des Polymeren in ca. 1 Liter Wasser ein und filtriert das gequollene Gelmaterial nach 2 Stunden über ein Sieb ab und bestimmt die aufgenommene Wassermenge durch Wägung. Im Falle des gemäß obigen Beispiels hergestellten Polymeren betrug das Gewicht der Gelmasse 422 g.

Wenn anstelle von Acrylsäure ein Gemisch aus 20 g Acrylsäure und 60 g AIBS eingesetzt wird, beträgt das Gewicht der Gelmasse 489 g.

Beispiel 79:

7,2 g ®Arkopal N 100 (Nichtionischer Emulgator auf der Basis eines oxethylierten Phenolderivats) und 19,4 g

®Span 80 (Nichtionischer Emulgator auf Basis eines Zuckeralkohol-Stearats) werden in ®Isopar M (Technisches Gemisch von Isoparaffin mit einem Siedepunkt von ca 200-240°C) aufgelöst und die resultierende Lösung in ein 1 Liter Reaktionsgefäß eingeschüttet, das mit einem Rührer, Thermometer und einem Stickstoffeinlaß versehen ist. Dann wird eine Monomerlösung durch Auflösung von 67,2 g Acrylamid, 30 g Acrylsäure, 10,2 g AMPP und 1,1 g Vinylphosphonsäuremonomethylester (VPE) und 0,15 g Methylenbisacrylamid in 105 ml Wasser hergestellt. Der pH-Wert der Monomerlösung wird auf 8,5 mit Ammoniak (25%ig) eingestellt. Unter schnellem Rühren wird die wäßrige Monomerlösung der organischen Phase zugefügt. Das Reaktionsgefäß wird evakuiert und anschließend mit Stickstoff gefüllt. Nun wird die Lösung von 0,0275 g Ammoniumpersulfat in 3 ml Wasser dem Gemisch zugefügt und damit die Polymerisation gestartet. Die Reaktion dauert 1 1/2 Stunden, die Reaktionstemperatur wird zwischen 30 und 40°C gehalten. Es resultiert eine stabile Emulsion, die unter Verwendung handelsüblicher oberflächenaktiver Mittel in an sich bekannter Weise in Wasser invertiert werden kann, wobei hochviskose Massen erhalten werden, welche sich zur Herstellung von Druckpasten eignen.
Viskosität: 0,2%ig in Wasser 25°C, 2200 mPa.s.

Auf ein Baumwollgewebe wird im Flachfilmdruck eine wie folgt herzustellende Druckfarbe in der üblichen Weise aufgebracht.

45 Gewichtsteile der 20%igen Dispersion (hergestellt durch Dispergieren von 60 Gewichtsteilen der nach obiger Herstellvorschrift erhaltenen Polymerisatdispersion in 47 Gewichtsteilen Testbenzin mit einem Siedebereich von 140-200°C und 32,2 Gewichtsteilen Testbenzin mit einem Siedebereich von 130-175°C unter Zusatz von 0,4 Gewichtsteilen eines Anlagerungsproduktes von 9 mol Ethylenoxid

an 1 mol Nonylphenol und 0,4 Gewichtsteilen eines Propylenoxid-Ethylenoxid-Blockpolymeren des PrO-EO Molverhältnisses 90:10) werden am Schnellrührer in 785 Gewichtsteile Wasser eingerührt. Anschließend werden nacheinander 120 Gewichtsteile einer handelsüblichen, ca. 40%igen Copolymerisat-Dispersion auf Polyacrylatbasis, 15 Gewichtsteile eines Mischharzes auf Melamin-Harnstoff-Formaldehyd-Basis, 25 Gewichtsteile der 37%igen wäßrigen Dispersion des Pigmentes mit der C.I. Nr. 12 485 und 10 Gewichtsteile der 33,3%igen wäßrigen Lösung einer anorganischen säureabspaltenden Verbindung zugegeben.

Der rote Pigmentdruck ist nach dem Trocknen und dem 5-minütigen Fixieren bei 150°C auf einer Heißluftapparatur gut reib- und schrubbecht sowie lösungsmittelbeständig und zeichnet sich besonders durch einen weichen Griff aus.

Beispiel 80:

In einem Polymerisationskolben von 1 Liter Inhalt, ausgestattet mit Planschliffdeckel, Rührer, Thermometer und Gaseinleitungsrohr werden in 200 g Wasser 20 g AIBS und 10 g AMPP gelöst und mit Ammoniak (25%ig) neutralisiert. Dann werden 60 g Acrylamid zugesetzt. Der pH-Wert wird auf 8,5 eingestellt und 10 g N-Vinyl-N-methyl-acetamid zugefügt. Unter Rühren und Einleiten von Stickstoff wird das Reaktionsgemisch auf 60°C erhitzt. Nun gibt man noch 1 g einer wäßrigen 10%igen Dibutylamin-HCl-Lösung und 0,1 g Ammoniumpersulfat zu. Die Reaktion dauert etwa 30 Minuten, wobei die Temperatur auf 70°C ansteigt. Das Reaktionsgemisch wird viskos. Es wird unter Rühren noch 2 Stunden bei 80°C nachgeheizt. Man erhält eine klare, hochviskose Lösung.

Der K-Wert beträgt 196,1.

Unbehandelter Baumwolltrikot (Interlock) wird auf einem Spezialfoulard für Gewirke bei einem Walzendruck von 1 bar/$cm^2$ und bei 22°C mit einer wäßrigen Flotte geklotzt, die im Liter 21 g des Reaktivfarbstoffs Reactive Orange 16 (COLOUR INDEX Nr. 17 757), 40 g des Reaktivfarbstoffs der Formel

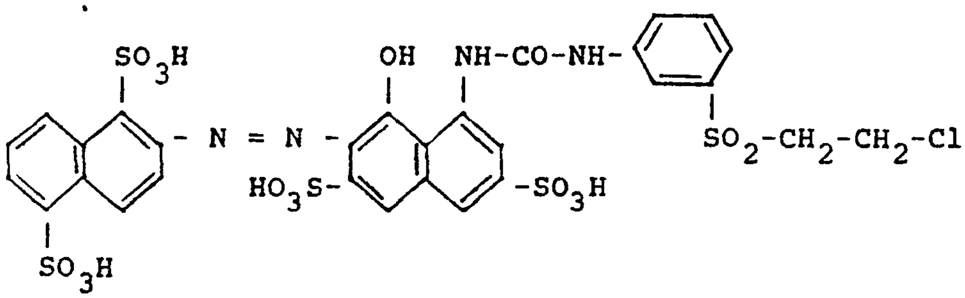

8 g eines handelsüblichen anionischen Netzmittels und 30 g des Mischpolymerisats (Klotzhilfsmittel) enthält, das nach obiger Herstellvorschrift erhalten wurde.

Das erforderliche Alkali wird mit einer Dosierpumpe zudosiert in einer Menge von 130 $cm^3$ einer (handelsüblichen) Natronwasserglaslösung mit einem spezifischen Gewicht von 1,345 (=37°Be), in welcher das Verhältnis $Na_2O:SiO_2$ 1:3,3 beträgt, und 34 $cm^3$ Natronlauge 32,5-gew.%ig je Liter Klotzflotte. Die hierbei erzielte Flottenaufnahme beträgt 171 %.

Nachdem die geklotzte Ware spannungsarm und kantengleich aufgedockt und mit Folie abgedeckt wurde, läßt man die Ware unter langsamer Rotation 15 Stunden verweilen.

Man erhält eine vollständig egale volle Rotfärbung.

Wird die Färbung wie vorstehend beschrieben, jedoch unter Weglassen des Mischpolymerisats durchgeführt, so wird nach dem Klotzen und Abquetschen eine Flottenaufnahme von nur 104 % bei gleichem Abquetschdruck erzielt. Die

hierbei erzielte Färbung unterscheidet sich in der Farbtiefe von der unter Zusatz des Mischpolymerisats erhaltenen um einen den verschiedenen Flottenaufnahmen proportionalen Wert und ist unegal (Kantenmarkierung).

Die in obigen Ausführungsbeispielen eingesetzte AMPP kann nach der folgenden Vorschrift hergestellt werden:

1041 g (5 mol) $PCl_5$ werden in 2,5 l wasserfreiem Toluol suspendiert und bei 10 - 15°C 281 g (5 mol) Isobuten eingeleitet. Man rührt 30 Minuten bei 15°C nach und leitet anschließend bei 10 - 15°C so lange $SO_2$ ein, bis eine klare Lösung entstanden ist.

Toluol und $SOCl_2$ werden abdestilliert. Zur Abspaltung des Chlorwasserstoffs wird der Rückstand 8 Stunden unter Zusatz von 3 g Triphenylphosphin bei 270 mbar auf 180°C erhitzt.

Die Destillation liefert 550 g eines Isomerengemisches aus 2-Methyl-propen-phosphonsäuredichlorid.
$Kp_{16mbar}$= 90 - 93°C. Ausbeute: 64 %.

173 g (1 mol) 2-Methylpropen-phosphonsäuredichlorid werden bei 20°C in 200 ml Wasser getropft. Anschließend wird im Vakuum eingedampft und mit Toluol im Vakuum azeotrop entwässert. Toluol wird im Vakuum abdestilliert und die freie Phosphonsäure mit 53,5 g (1 mol) Acrylnitril vermischt. Dann werden bei 25 - 30°C 104 g (1 mol) 96%ige Schwefelsäure zugetropft. Nach 72 Stunden wird die Reaktionsmischung mit 100 g Eis versetzt und die Schwefelsäure mit 80 g NaOH in 200 ml Wasser neutralisiert. Man dampft im Vakuum bis zur Trockene ein, extrahiert den Salzrückstand mit iso-Butanol, engt ein und fällt die Phosphonsäure I mit Aceton aus.

Ausbeute: 87 g (42 % der Theorie)
Fp.: 148 - 150°C.

In analoger Weise läßt sich die in den Beispielen eingesetzte MAMPP herstellen.

Patentansprüche für die Vertragsstaaten: BE, DE, FR, GB, IT, NL, SE, CH

1. Homo- und Copolymerisate der Formel I

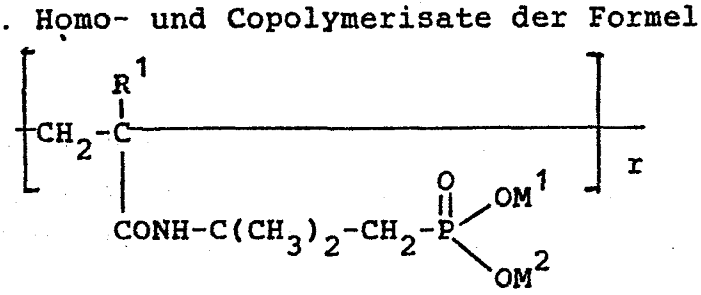

(I)

worin

$R^1$ Wasserstoff oder Methyl bedeutet,

$M^1$ und $M^2$ gleich oder verschieden sind und Wasserstoff oder ein Äquivalent eines Kations bedeuten und

r eine Durchschnittszahl ist, die größer oder gleich 100 ist.

2. Copolymerisate, dadurch gekennzeichnet, daß sie in den Polymerisatketten Baugruppen der Formel II

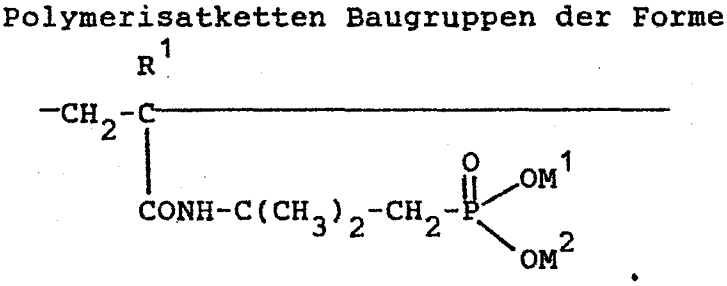

(II)

worin $R^1$, $M^1$ und $M^2$ die im Anspruch 1 genannten Bedeutungen haben, enthalten.

3. Copolymerisate gemäß Anspruch 2, dadurch gekennzeichnet, daß sie aus Baugruppen der Formeln II, III und gegebenenfalls IV und V

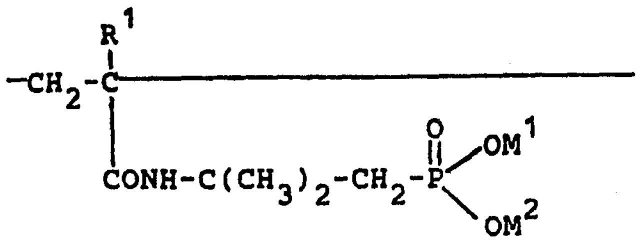

(II)

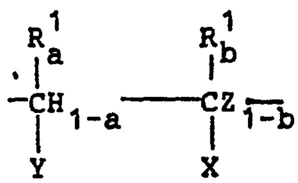

(III)

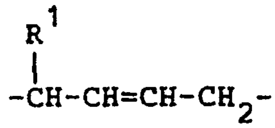

(IV)

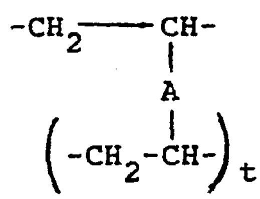

(V)

aufgebaut sind, worin $R^1$, $M^1$ und $M^2$ die im Anspruch 1 genannten Bedeutungen haben und X die Carbonamidgruppe $-CONH_2$; eine Gruppe der Formel VI

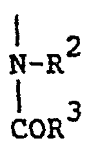

(VI)

worin $R^2$ Wasserstoff, Methyl, Ethyl oder Hydroxymethyl und $R^3$ Wasserstoff oder Alkyl mit 1 bis 4 C-Atomen bedeuten oder $R^2$ und $R^3$ gemeinsam für eine Polymethylenkette mit 3 bis 6 C-Atomen stehen; Carboxyl oder dessen Salz mit einem Kation $M^1$ oder $M^2$; Alkylcarbonyl(Alkyl-CO-) mit insgesamt 2 bis 20 C-Atomen; Alkoxycarbonyl mit 2 bis 19, vorzugsweise 2 bis 5 C-Atomen, Hydroxyalkoxycarbonyl mit 3 bis 5 C-Atomen; N-Methylolcarbonamid der Formel $HOCH_2NH-CO-$, dessen Methylolgruppe gegebenenfalls mit Alkanolen mit 1 bis 18 C-Atomen verethert sein kan; Alkoxy mit 1 bis 20 C-Atomen; Alkanoyloxy mit 1 bis 20

C-Atomen; Chlor; Cyan; gegebenenfalls substituiertes Phenyl oder Benzyl; Pyridyl; Imidazolyl-(1); die Sulfonsäuregruppe; Sulfoalkylamidocarbonyl mit 1 bis 4 C-Atomen im Alkylrest; die Phosphonsäuregruppe, wobei die Sulfonsäure- und Phosphonsäuregruppen auch in Form ihrer Salze mit einem Kation $M^1$ oder $M^2$ vorliegen können; die Phosphonsäureestergruppen der Formeln VII und VIII

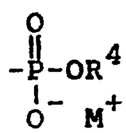 (VII)

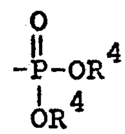 (VIII)

worin $R^4$ Alkyl mit 1 bis 4, vorzugsweise 1 oder 2, C-Atomen ist; einen Rest der Formel IX

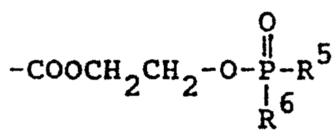 (IX)

worin $R^5$ und $R^6$ gleich oder verschieden sind und für Alkyl mit 1 bis 7, vorzugsweise 1 oder 2, C-Atomen stehen; einen Rest der Formel X

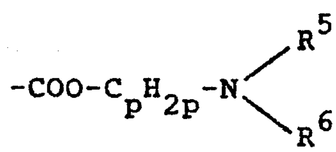 (X)

worin $R^5$ und $R^6$ die oben angegebenen Bedeutungen haben und p für eine Zahl von 1 bis 4 steht; einen Rest der Formel XI

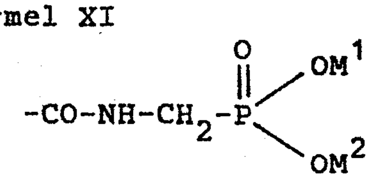 (XI)

worin $M^1$ und $M^2$ die oben genannten Bedeutungen haben; oder einen Rest der Formel XII

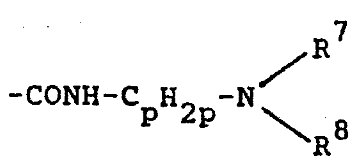 (XII)

worin $R^7$ und $R^8$ gleich oder verschieden sind und für

Alkyl mit 1 bis 4, vorzugsweise 1 oder 2, C-Atomen stehen und p für eine Zahl von 1 bis 4 steht; sowie die den Formeln X und XII entsprechenden beispielsweise durch Dimethylsulfat oder Methylchlorid quaternisierten Gruppen bedeutet,

Y für Wasserstoff oder, sofern X Carboxyl bzw. dessen Salz ist, für Wasserstoff oder Carboxyl bzw. dessen Salz steht oder

X und Y gemeinsam einen zweiwertigen Substituenten der Formel XIII

$$-CO-O-CO- \qquad (XIII)$$

bilden;

Z für Wasserstoff oder Halogen steht,

a und b jeweils die Werte 0 oder 1 haben können und die Summe a + b ebenfalls 0 oder 1 ist und

A ein vernetzendes Brückenglied eines bekannten Vernetzers oder ein vernetzendes Brückenglied der Formel XIV, XV oder XVI

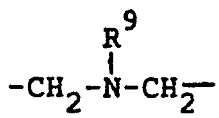

((XIV)

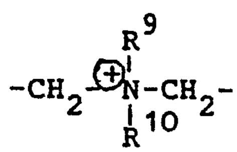

(XV)

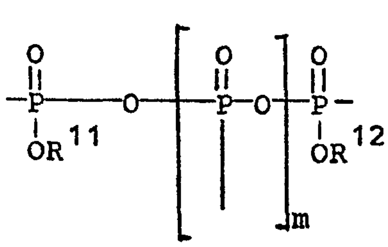

(XVI)

bedeutet, wobei $R^9$ für Wasserstoff oder Alkyl mit 1 - 24 C-Atomen und $R^{10}$ für Alkyl mit 1 bis 24 C-Atomen steht; $R^{11}$ und $R^{12}$ unabhängig voneinander Wasserstoff oder Alkyl mit 1 bis 4 C-Atomen bedeuten, m für eine Zahl von 0 bis 6, vorzugsweise 0 bis 2, und t für eine Zahl von 1 bis 3, vorzugsweise für 1, steht.

4. Copolymerisate gemäß Anspruch 3, dadurch gekennzeichnet, daß in den Baugruppen der Formel III
a für Null und b für 1 steht,
Z Wasserstoff ist, und die damit der Formel XVII entsprechen

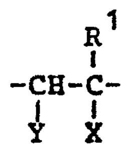

(XVII)

worin $R^1$ und Y die im Anspruch 3 angegebenen Bedeutungen haben und
X die Carbonamidgruppe $-CONH_2$; eine Gruppe der Formel VI

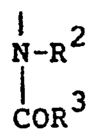

(VI)

worin $R^2$ Wasserstoff, Methyl, Ethyl und $R^3$ Wasserstoff oder Alkyl mit 1 bis 4 C-Atomen bedeuten oder $R^2$ und $R^3$ gemeinsam für eine Polymethylenkette mit 3 bis 6 C-Atomen stehen; Carboxyl oder dessen Salz mit einem Kation $M^1$ oder $M^2$; Alkoxycarbonyl mit 2 bis 5 C-Atomen, Hydroxyalkoxycarbonyl mit 3 bis 5 C-Atomen; N-Methylolcarbonamid der Formel $HOCH_2NH-CO-$; Alkoxy mit 1 bis 4 C-Atomen; Alkanoyloxy mit 1 bis 4 C-Atomen; Cyan; Phenyl; die Sulfonsäuregruppe; Sulfoalkylamidocarbonyl mit 1 bis 4 C-Atomen im Alkylrest; die Phosphonsäuregruppe, wobei die Sulfonsäure- und Phosphonsäuregruppen auch in Form ihrer Salze mit einem Kation $M^1$ oder $M^2$ vorliegen können; die Phosphonsäureestergruppe der Formel VII

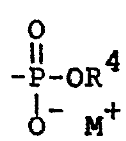

((VII)

worin $R^4$ Alkyl mit 1 bis 4, vorzugsweise 1 oder 2, C-Atomen ist; einen Rest der Formel X

0132630

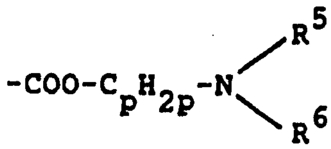 (X)

worin $R^5$ und $R^6$ gleich oder verschieden sind und für Alkyl mit 1 bis 7, vorzugsweise 1 oder 2, C-Atomen stehen und p für eine Zahl von 1 bis 4 steht; oder einen Rest der Formel XII

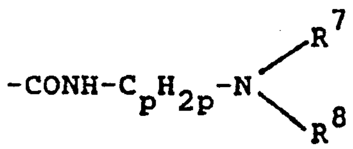 (XII)

worin $R^7$ und $R^8$ gleich oder verschieden sind und für Alkyl mit 1 bis 4, vorzugsweise 1 oder 2, C-Atomen stehen und p für eine Zahl von 1 bis 4 steht; sowie die den Formeln X und XII entsprechenden beispielsweise durch Dimethylsulfat oder Methylchlorid quaternisierten Gruppen bedeutet;

Y für Wasserstoff oder, sofern X Carboxyl bzw. dessen Salz ist, für Wasserstoff oder Carboxyl bzw. dessen Salz steht oder

X und Y gemeinsam einen zweiwertigen Substituenten der Formel XIII

$$-CO-O-CO- \qquad (XIII)$$

bilden; und

A ein vernetzendes Brückenglied eines bekannten Vernetzers oder ein vernetzendes Brückenglied der Formel XV oder XVI

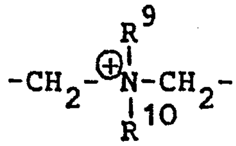 (XV)

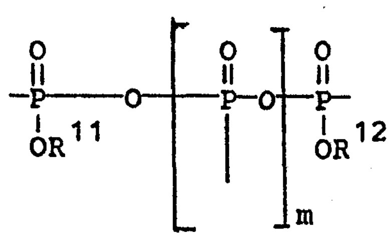 (XVI)

0132630

bedeutet, wobei $R^9$ für Wasserstoff oder Alkyl mit 1 bis 4 C-Atomen und $R^{10}$ für Alkyl mit 1 bis 4 C-Atomen steht, $R^{11}$ und $R^{12}$ unabhängig voneinander Wasserstoff oder Alkyl mit 1 bis 4 C-Atomen bedeuten und m für eine Zahl von 0 bis 6, vorzugsweise 0 bis 2, steht.

5. Copolymerisate gemäß den Ansprüchen 2 bis 4, dadurch gekennzeichnet, daß die Polymerisatketten die Baugruppen der Formel II in einem Mengenanteil von 1 bis 99 Gew.% enthalten.

6. Verfahren zur Herstellung von Homo- und Copolymerisaten der Formel I des Anspruchs 1, dadurch gekennzeichnet, daß man eine Verbindung oder eine Mischung verschiedener Verbindungen der allgemeinen Formel IIa

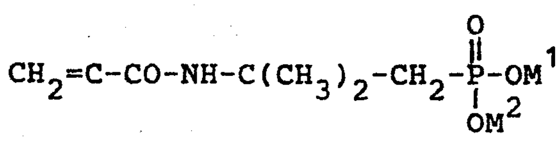

(IIa)

in an sich bekannter Weise homo- bzw. copolymerisiert.

7. Verfahren zur Herstellung von Copolymerisaten des Anspruchs 2, die an den Polymerketten Substituenten der Formel

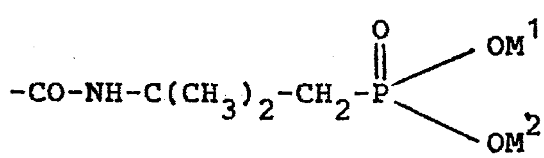

enthalten, worin $M^1$ und $M^2$ die im Anspruch 1 genannten Bedeutungen haben, dadurch gekennzeichnet, daß man in an sich bekannter Weise Verbindungen der Formel IIa

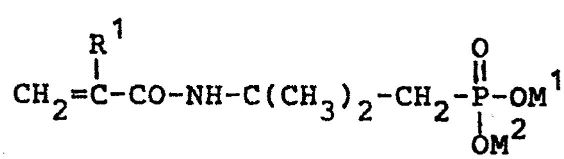

(IIa)

0132630

in reiner Form oder in Mischung untereinander mit anderen bekannten copolymerisierbaren Verbindungen copolymerisiert, wobei, sofern Copolymerisate in Abwesenheit von ringoffenen Vinylamiden der Formel VIa

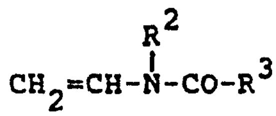

(VIa)

hergestellt werden, die sauren Gruppen der eingesetzten Monomeren vor der Polymerisation neutralisiert werden können, aber nicht müssen, sofern aber Copolymerisate in Gegenwart von ringoffenen Verbindungen der Formel VIa hergestellt werden, die sauren Gruppen vor der Polymerisation neutralisiert werden.

8. Verfahren gemäß Anspruch 7 zur Herstellung von Copolymerisaten, die an den Polymerenketten Substituenten der Formel

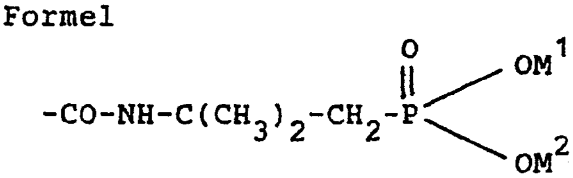

enthalten, worin $M^1$ und $M^2$ die im Anspruch 1 genannten Bedeutungen haben, dadurch gekennzeichnet, daß zur Herstellung von je 100 Gewichtsteilen der erfindungsgemäßen Copolymerisate die gewünschte Menge eines Acrylsäure-bzw. Methacrylsäurederivats der Formel IIa

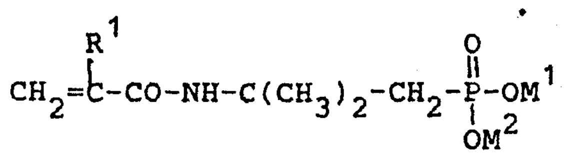

(IIa)

worin $R^1$, $M^1$ und $M^2$ die oben angegebenen Bedeutungen haben, in reiner Form oder eine Mischung mehrerer Verbindungen dieser allgemeinen Formel mit der zu 100 Gewichtsteilen ergänzenden Menge anderer bekannter copolymerisierbarer Monomerer der Formel IIIa

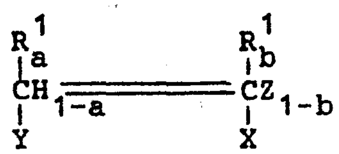

(IIIa)

worin $R^1$, X, X, Z, a und b die oben genannten Bedeutungen haben und zwischen a und b die oben angegebene Beziehung besteht, sowie gegebenenfalls ein Dien der Formel IVa

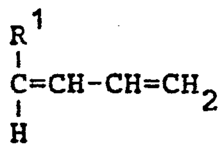

(IVa)

und gegebenenfalls eine bekannte Vernetzersubstanz und/ oder eine mehrfach ungesättigte Verbindung der Formel Va

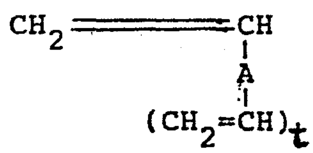

(Va)

worin $R^1$ und R die oben genannten Bedeutungen haben, copolymerisiert, wobei für den Fall, daß ein Comonomeres der Formel IIIa eingesetzt wird, in dem X eine Gruppe der Formel VI ist, worin $R^4$ und $R^5$ nicht gemeinsam eine Tri- oder Pentamethylengruppe bilden, obligatorisch für den Fall, daß kein derartiges Comonomeres eingesetzt wird, gegebenenfalls durch Zusatz einer Base die sauren Gruppen neutralisiert werden und die Copolymerisation in an sich bekannter Weise eingeleitet und bei 10 bis 120°C durchgeführt wird.

9. Verfahren gemäß Anspruch 8, dadurch gekennzeichnet, daß man die Verbindung der Formel IIa mit den anderen bekannten copolymerisierbaren Monomeren im Gewichtsverhältnis 1 : 99 bis 99 : 1 umsetzt.

10. Verfahren gemäß Anspruch 8, dadurch gekennzeichnet, daß man eine Verbindung der Formel IIIa einsetzt, in der a = 0 und b = 1 ist, die somit der Formel XVIIa

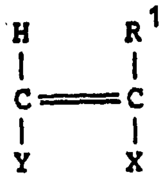

(XVIIa)

entspricht, worin $R^1$, X und Y die im Anspruch 3 genannten Bedeutungen haben.

11. Verwendung der Copolymerisate des Anspruchs 2 und deren Metallchelate als Verdicker für Tertiärförderfluids.

12. Verwendung von Homo- und Copolymerisaten der Ansprüche 1 oder 2 als Scale Inhibitoren.

13. Verwendung von Homo- und Copolymerisaten der Ansprüche 1 oder 2 als Druckverdicker und Klotzhilfsmittel in der Textilfärberei.

14. Verwendung von vernetzten oder chelatisierten Homo- und Copolymerisaten der Ansprüche 1 oder 2 als Absorptionsmittel für wäßrige Flüssigkeiten.

Patentansprüche für den Vertragsstaat AT

1. Verfahren zur Herstellung von Homo- und Copolymerisaten der Formel I

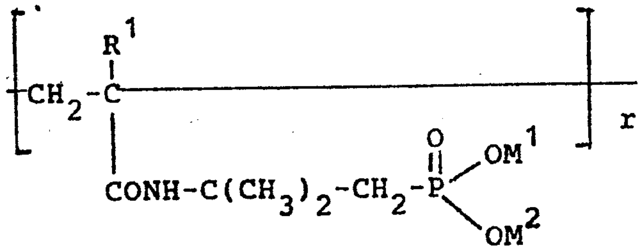

(I)

worin
$R^1$ Wasserstoff oder Methyl bedeutet,
$M^1$ und $M^2$ gleich oder verschieden sind und Wasserstoff oder ein Äquivalent eines Kations bedeuten und
r eine Durchschnittszahl ist, die größer oder gleich 100 ist , dadurch gekennzeichnet,
daß man eine Verbindung oder eine Mischung verschiedener Verbindungen der allgemeinen Formel IIa

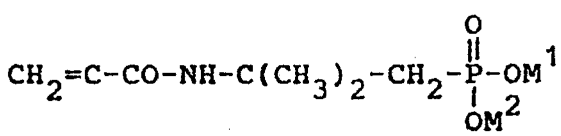

(IIa)

in an sich bekannter Weise homo- bzw. copolymerisiert.

2. Verfahren zur Herstellung von Copolymerisaten, die in den Polymerisatketten Baugruppen der Formel II

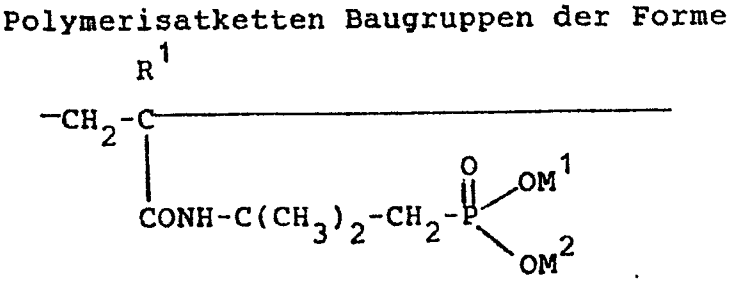

(II)

worin $R^1$, $M^1$ und $M^2$ die im Anspruch 1 genannten Bedeutungen haben, enthalten, dadurch gekennzeichnet, daß man Verbindungen der Formel IIa

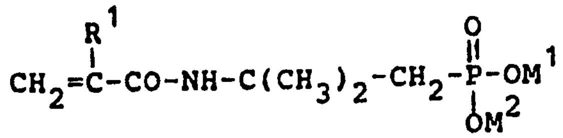

(IIa)

in reiner Form oder in Mischung untereinander mit anderen bekannten copolymerisierbaren Verbindungen in an sich bekannter Weise copolymerisiert, wobei, sofern Copolymerisate in Abwesenheit von ringoffenen Vinylamiden der Formel VIa

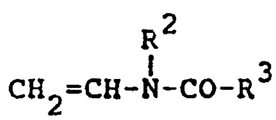

(VIa)

hergestellt werden, die sauren Gruppen der eingesetzten Monomeren vor der Polymerisation neutralisiert werden können, aber nicht müssen, sofern aber Copolymerisate in Gegenwart von ringoffenen Verbindungen der Formel VIa hergestellt werden, die sauren Gruppen vor der Polymerisation neutralisiert werden.

3. Verfahren zur Herstellung von Copolymerisaten, die aus Baugruppen der Formeln II, III und gegebenenfalls IV und V

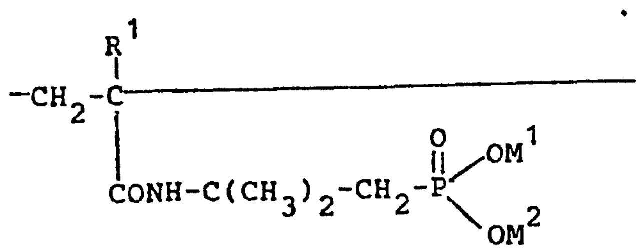

(II)

0132630

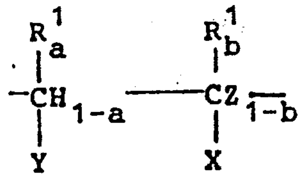

(III)

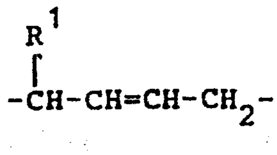

(IV)

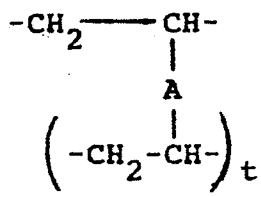

(V)

aufgebaut sind, worin
$R^1$, $M^1$ und $M^2$ die im Anspruch 1 genannten Bedeutungen haben und X die Carbonamidgruppe $-CONH_2$; eine Gruppe der Formel VI

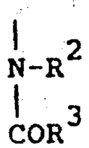

(VI)

worin $R^2$ Wasserstoff, Methyl, Ethyl oder Hydroxymethyl und $R^3$ Wasserstoff oder Alkyl mit 1 bis 4 C-Atomen bedeuten oder $R^2$ und $R^3$ gemeinsam für eine Polymethylenkette mit 3 bis 6 C-Atomen stehen; Carboxyl oder dessen Salz mit einem Kation $M^1$ oder $M^2$; Alkylcarbonyl(Alkyl-CO-) mit insgesamt 2 bis 20 C-Atomen; Alkoxycarbonyl mit 2 bis 19, vorzugsweise 2 bis 5 C-Atomen, Hydroxyalkoxycarbonyl mit 3 bis 5 C-Atomen; N-Methylolcarbonamid der Formel $HOCH_2NH-CO-$, dessen Methylolgruppe gegebenenfalls mit Alkanolen mit 1 bis 18 C-Atomen verethert sein kan; Alkoxy mit 1 bis 20 C-Atomen; Alkanoyloxy mit 1 bis 20

C-Atomen; Chlor; Cyan; gegebenenfalls substituiertes Phenyl oder Benzyl; Pyridyl; Imidazolyl-(1); die Sulfonsäuregruppe; Sulfoalkylamidocarbonyl mit 1 bis 4 C-Atomen im Alkylrest; die Phosphonsäuregruppe, wobei die Sulfonsäure- und Phosphonsäuregruppen auch in Form ihrer Salze mit einem Kation $M^1$ oder $M^2$ vorliegen können; die Phosphonsäureestergruppen der Formeln VII und VIII

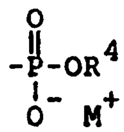 (VII) 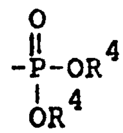 (VIII)

worin $R^4$ Alkyl mit 1 bis 4, vorzugsweise 1 oder 2, C-Atomen ist; einen Rest der Formel IX

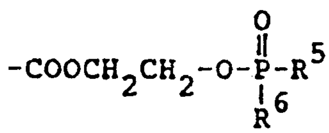 (IX)

worin $R^5$ und $R^6$ gleich oder verschieden sind und für Alkyl mit 1 bis 7, vorzugsweise 1 oder 2, C-Atomen stehen; einen Rest der Formel X

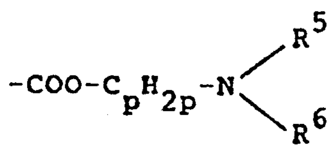 (X)

worin $R^5$ und $R^6$ die oben angegebenen Bedeutungen haben und p für eine Zahl von 1 bis 4 steht; einen Rest der Formel XI

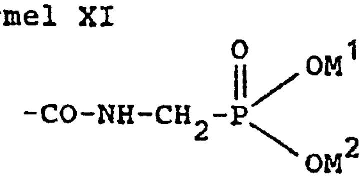 (XI)

worin $M^1$ und $M^2$ die oben genannten Bedeutungen haben; oder einen Rest der Formel XII

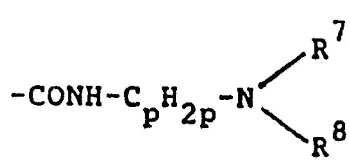 (XII)

worin $R^7$ und $R^8$ gleich oder verschieden sind und für

Alkyl mit 1 bis 4, vorzugsweise 1 oder 2, C-Atomen stehen und p für eine Zahl von 1 bis 4 steht; sowie die den Formeln X und XII entsprechenden beispielsweise durch Dimethylsulfat oder Methylchlorid quaternisierten Gruppen bedeutet,

Y für Wasserstoff oder, sofern X Carboxyl bzw. dessen Salz ist, für Wasserstoff oder Carboxyl bzw. dessen Salz steht oder

X und Y gemeinsam einen zweiwertigen Substituenten der Formel XIII

-CO-O-CO- (XIII)

bilden;

Z für Wasserstoff oder Halogen steht,

a und b jeweils die Werte O oder 1 haben können und die Summe a + b ebenfalls O oder 1 ist und

A ein vernetzendes Brückenglied eines bekannten Vernetzers oder ein vernetzendes Brückenglied der Formel XIV, XV oder XVI

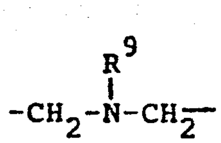

((XIV)

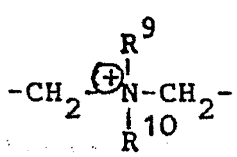

(XV)

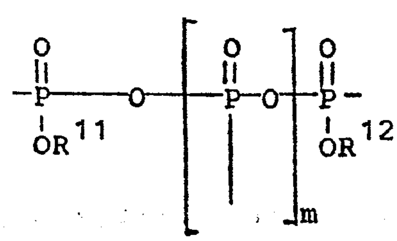

(XVI)

bedeutet, wobei $R^9$ für Wasserstoff oder Alkyl mit 1 - 24 C-Atomen und $R^{10}$ für Alkyl mit 1 bis 24 C-Atomen steht; $R^{11}$ und $R^{12}$ unabhängig voneinander Wasserstoff oder Alkyl mit 1 bis 4 C-Atomen bedeuten, m für eine Zahl von O bis 6, vorzugsweise O bis 2, und t für eine Zahl von 1 bis 3, vorzugsweise für 1, steht, dadurch gekennzeichnet, daß

zur Herstellung von je 100 Gewichtsteilen der erfindungsgemäßen Copolymerisate die gewünschte Menge eines Acrylsäure- bzw. Methacrylsäurederivats der Formel IIa

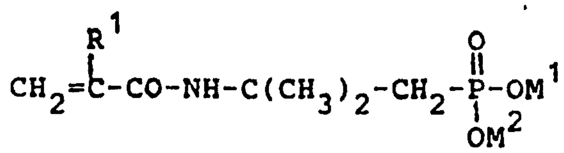

(IIa)

worin $R^1$, $M^1$ und $M^2$ die oben angegebenen Bedeutungen haben, in reiner Form oder eine Mischung mehrerer Verbindungen dieser allgemeinen Formel mit der zu 100 Gewichtsteilen ergänzenden Menge anderer bekannter copolymerisierbarer Monomerer der Formel IIIa

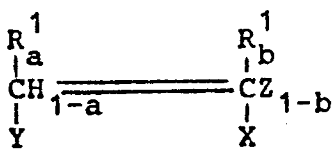

(IIIa)

worin $R^1$, X, X, Z, a und b die oben genannten Bedeutungen haben und zwischen a und b die oben angegebene Beziehung besteht, sowie gegebenenfalls ein Dien der Formel IVa

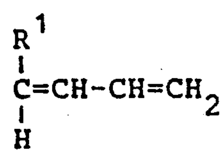

(IVa)

und gegebenenfalls eine bekannte Vernetzersubstanz und/oder eine mehrfach ungesättigte Verbindung der Formel Va

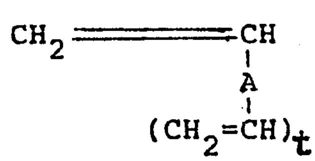

(Va)

worin $R^1$ und R die oben genannten Bedeutungen haben, copolymerisiert, wobei für den Fall, daß ein Comonomeres der Formel IIIa eingesetzt wird, in dem X eine Gruppe der

4. Verfahren gemäß Anspruch 3, dadurch gekennzeichnet, daß solche copolymerisierbaren Monomeren der Formel IIIa eingesetzt werden, in denen
a für Null und b für 1 steht,
Z Wasserstoff ist, und die damit der Formel XVIIa entsprechen

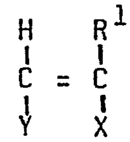

(XVIIa)

worin $R^1$ und Y die im Anspruch 3 angegebenen Bedeutungen haben und
X die Carbonamidgruppe $-CONH_2$; eine Gruppe der Formel VI

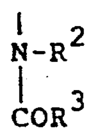

(VI)

worin $R^2$ Wasserstoff, Methyl, Ethyl und $R^3$ Wasserstoff oder Alkyl mit 1 bis 4 C-Atomen bedeuten oder $R^2$ und $R^3$ gemeinsam für eine Polymethylenkette mit 3 bis 6 C-Atomen stehen; Carboxyl oder dessen Salz mit einem Kation $M^1$ oder $M^2$; Alkoxycarbonyl mit 2 bis 5 C-Atomen, Hydroxyalkoxycarbonyl mit 3 bis 5 C-Atomen; N-Methylolcarbonamid der Formel $HOCH_2NH-CO-$; Alkoxy mit 1 bis 4 C-Atomen; Alkanoyloxy mit 1 bis 4 C-Atomen; Cyan; Phenyl; die Sulfonsäuregruppe; Sulfoalkylamidocarbonyl mit 1 bis 4 C-Atomen im Alkylrest; die Phosphonsäuregruppe, wobei die Sulfonsäure- und Phosphonsäuregruppen auch in Form ihrer Salze mit einem Kation $M^1$ oder $M^2$ vorliegen können; die Phosphonsäureestergruppe der Formel VII

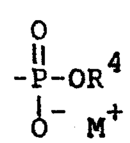

((VII)

worin $R^4$ Alkyl mit 1 bis 4, vorzugsweise 1 oder 2, C-Atomen ist; einen Rest der Formel X

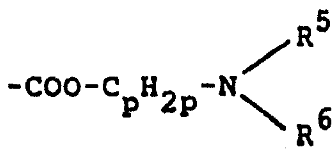 (X)

worin $R^5$ und $R^6$ gleich oder verschieden sind und für Alkyl mit 1 bis 7, vorzugsweise 1 oder 2, C-Atomen stehen und p für eine Zahl von 1 bis 4 steht; oder einen Rest der Formel XII

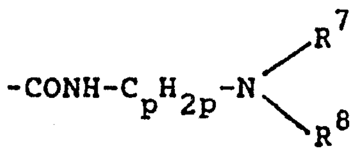 (XII)

worin $R^7$ und $R^8$ gleich oder verschieden sind und für Alkyl mit 1 bis 4, vorzugsweise 1 oder 2, C-Atomen stehen und p für eine Zahl von 1 bis 4 steht; sowie die den Formeln X und XII entsprechenden beispielsweise durch Dimethylsulfat oder Methylchlorid quaternisierten Gruppen bedeutet;

Y für Wasserstoff oder, sofern X Carboxyl bzw. dessen Salz ist, für Wasserstoff oder Carboxyl bzw. dessen Salz steht oder

X und Y gemeinsam einen zweiwertigen Substituenten der Formel XIII

$$-CO-O-CO- \qquad \text{(XIII)}$$

bilden; und daß copolymerisierbare Monomere der Formel V eingesetzt werden, in denen

A ein vernetzendes Brückenglied eines bekannten Vernetzers oder ein vernetzendes Brückenglied der Formel XV oder XVI

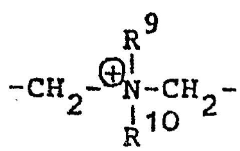 (XV)

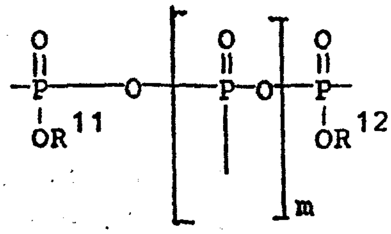

(XVI)

bedeutet, wobei $R^9$ für Wasserstoff oder Alkyl mit 1 bis 4 C-Atomen und $R^{10}$ für Alkyl mit 1 bis 4 C-Atomen steht, $R^{11}$ und $R^{12}$ unabhängig voneinander Wasserstoff oder Alkyl mit 1 bis 4 C-Atomen bedeuten und m für eine Zahl von 0 bis 6, vorzugsweise 0 bis 2, steht.

5. Verfahren gemäß Anspruch 8, dadurch gekennzeichnet, daß man die Verbindung der Formel IIa mit den anderen bekannten copolymerisierbaren Monomeren im Gewichtsverhältnis 1 : 99 bis 99 : 1 umsetzt.

6. Verwendung der Copolymerisate hergestellt gemäß Anspruch 2 und deren Metallchelate als Verdicker für Tertiärförderfluids.

7. Verwendung von Homo- und Copolymerisaten hergestellt gemäß den Ansprüchen 1 oder 2 als Scale Inhibitoren.

8. Verwendung von Homo- und Copolymerisaten hergestellt gemäß den Ansprüchen 1 oder 2 als Druckverdicker und -Klotzhilfsmittel in der Textilfärberei.

9. Verwendung von vernetzten oder chelatisierten Homo- und Copolymerisaten hergestellt gemäß den Ansprüchen 1 oder 2 als Absorptionsmittel für wäßrige Flüssigkeiten.